# EUROPEAN PATENT APPLICATION

(11) **EP 4 704 461 A1**
(43) Date of publication of application: **04.03.2026**
(21) Application number: 24795560.2
(22) Date of filing: 23.02.2024
(51) Int. Cl.: H04W 24/04, H04W 76/15

(54) **METHOD, DEVICE AND APPARATUS FOR ESTABLISHING REDUNDANT TRANSMISSION**

(30) Priority: 27.04.2023 CN 202310472537
(71) Applicant: Datang Mobile Communications Equipment Co., Ltd., Beijing 100085 (CN)
(72) Inventor: GU, Xiaofei, Beijing 100085 (CN); LI, Huixin, Beijing 100085 (CN); QIN, Ruiyan, Beijing 100085 (CN)
(74) Representative: Studio Torta S.p.A.
(86) International application number: PCT/CN2024/078255
(87) International publication number: WO 2024/222172

(57) **Abstract**

Provided in the present application are a method, device and apparatus for establishing redundant transmission. The method is applied to a first access network device, and comprises: when a terminal expects to establish redundant transmission, determining a second network node, wherein a first user plane path has been established between the terminal and a data network (DN) by means of a first network node; and establishing a second user plane path between the terminal and the DN by means of the second network node, wherein the first user plane path and the second user plane path are used for establishing redundant transmission.

## Description

### CROSS-REFERENCE TO RELATED APPLICATION

The present application claims priority to Chinese Patent Application No. 202310472537.7, filed on April 27, 2023, entitled "Method, Device and Apparatus for Establishing Redundant Transmission", which is hereby incorporated by reference in its entirety.

### FIELD

The present application relates to the field of communications, and in particular, to methods and apparatuses for establishing redundant transmission, and devices.

### BACKGROUND

In fifth generation (5G) new radio (NR), redundant transmission for a terminal may be established to support an ultra-reliable low-latency communications (URLLC) service.

Traditionally, a redundant transmission for a terminal may be achieved by connecting the terminal to two radio access networks (RANs), connecting the two RANs to a network node simultaneously, then initiating a dual protocol data unit (PDU) session by the terminal, and establishing two separate and disjoint user plane paths through the two RANs to a same data network (DN). Alternatively, a redundant transmission for a terminal may be a redundant transmission in case that there are two N3 tunnels between a user plane function (UPF) and a single RAN node in a single PDU session. Alternatively, a redundant transmission for a terminal may be a redundant transmission in case that there are two N3 tunnels and two N9 tunnels between the RAN and the UPF.

With development of the network, control planes of the network have gradually evolved towards a distributed architecture. However, traditionally, all redundant transmissions for a terminal are performed within a same network node. Therefore, there is an urgent need to provide a method for establishing redundant transmission in a distributed network.

### SUMMARY

The present application provides methods and apparatuses for establishing redundant transmission, and devices, so as to establish two different user plane paths based on two different network nodes in a distributed network, thereby establishing a redundant transmission for a terminal.

According to an embodiment of the present application, a method for establishing redundant transmission performed by a first access network device is provided. The method includes:
in case that a terminal expects to establish a redundant transmission, determining a second network node, where a first user plane path is established between the terminal and a data network, DN, through a first network node; and
establishing a second user plane path between the terminal and the DN through the second network node, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, determining the second network node includes:
receiving information of at least one network node, and determining the second network node from the at least one network node based on the information of the at least one network node; or,
receiving information of the second network node sent from the terminal, and determining the second network node based on the information of the second network node.

In an embodiment, in case that the first user plane path is established through the first access network device, receiving the information of the at least one network node includes:
receiving the information of the at least one network node sent from the first network node; or,
receiving the information of the at least one network node sent from a centralized network node.

In an embodiment, the method further includes:
receiving capability information sent from the terminal, where the capability information indicates establishing the redundant transmission; and
determining, based on the capability information, that the terminal expects to establish the redundant transmission.

In an embodiment, in case that the first user plane path is established through the second access network device, the method further includes:
receiving a resource request sent from the second access network device, where the resource request is used to request allocation of resources for a protocol data unit, PDU, session corresponding to the second user plane path or a quality of service, QoS, flow corresponding to the second user plane path; and
sending, based on the resources, a first radio resource control, RRC, reconfiguration message to the second access network device, where the first RRC reconfiguration message is used to indicated the first access network device to establish a connection with the terminal.

In an embodiment, receiving the information of the at least one network node includes:
obtaining the information of the at least one network node based on the resource request sent from the second access network device; or,
receiving the information of the at least one network node sent from a centralized network node.

In an embodiment, the method further includes:
after establishing the connection with the terminal, determining that the terminal expects to establish the redundant transmission.

According to an embodiment of the present application, a method for establishing redundant transmission performed by a terminal is provided, where a first user plane path is established between the terminal and a data network, DN, through a first network node. The method includes:
in case that the terminal expects to establish a redundant transmission, determining a second network node; and
sending information of the second network node to a first access network device, where the second network node is used by the first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, determining the second network node includes:
receiving information of at least one network node; and
determining the second network node from the at least one network node based on the information of the at least one network node.

In an embodiment, receiving the information of the at least one network node includes:
in case that the first user plane path is established through the first access network device, receiving the information of the at least one network node sent from the first access network device; or,
in case that the first user plane path is established through the second access network device, receiving the information of the at least one network node sent from the second access network device.

In an embodiment, in case that the first user plane path is established through the first access network device, the method further includes:
sending capability information to the first access network device, where the capability information is used to indicate establishing the redundant transmission.

In an embodiment, in case that the first user plane path is established through the second access network device, the method further includes:
sending capability information to the second access network device, where the capability information is used to indicate that the terminal supports dual connectivity.

In an embodiment, the method further includes:
receiving a second RRC reconfiguration message sent from the second access network device, where the second RRC reconfiguration message includes a first RRC reconfiguration message of the first access network device; and
establishing a connection with the first access network device based on the first RRC reconfiguration message.

According to an embodiment of the present application, a method for establishing redundant transmission performed by a second access network device is provided. The method includes:
in case that a terminal expects to establish a redundant transmission, receiving information of at least one network node, where a first user plane path is established between the terminal and a DN through a first network node; and
send the information of the at least one network node, where the information of the at least one network node is used to determine a second network node, the second network node is used by the first access network device to establish a second user plane path between the terminal and the DN, and the first user plane path and the second user plane path are used to establish the redundant transmission.

In an embodiment,
the first user plane path is established through the first access network device; or,
the first user plane path is established through the second access network device, and the second access network device is different from the first access network device.

In an embodiment, receiving the information of the at least one network node includes:
receiving the information of the at least one network node sent from the first network node;
   or,
receiving the information of the at least one network node sent from a centralized network node.

In an embodiment, sending the information of the at least one network node includes:
sending the information of the at least one network node to the first access network device; or,
sending the information of the at least one network node to the terminal.

In an embodiment, where the method further includes:
sending a resource request to the first access network device, where the resource request is used to request allocation of resources for a protocol data unit, PDU, session corresponding to the second user plane path or a QoS flow corresponding to the second user plane path; and
sending, based on the resources, a second radio resource control, RRC, reconfiguration message to the terminal, where the second RRC reconfiguration message includes a first RRC reconfiguration message of the first access network device.

According to an embodiment of the present application, a method for establishing redundant transmission performed by a first network node is provided. The method includes:
establishing a first user plane path between a terminal and a data network, DN;
in case that the terminal expects to establish a redundant transmission, obtaining information of at least one network node; and
sending the information of the at least one network node, where the at least one network node includes a second network node, the second network node is used by a first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, sending the information of the at least one network node includes:
sending the information of the at least one network node to the first access network device; or,
sending the information of the at least one network node to the second access network device.

According to an embodiment of the present application, a method for establishing redundant transmission performed by a centralized network node is provided. The method includes:
in case that a terminal expects to establish a redundant transmission, obtaining information of at least one network node, where a first user plane path is established between the terminal and a data network, DN, through a first network node;
sending the information of the at least one network node, where the at least one network node includes a second network node, the second network node is used by a first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, sending the information of the at least one network node includes:
sending the information of the at least one network node to the first access network device; or,
sending the information of the at least one network node to the second access network device.

According to an embodiment of the present application, a method for establishing redundant transmission performed by a second network node is provided. The method includes:
in case that a terminal expects to establish a redundant transmission, establishing a second user plane path between the terminal and a data network, DN, where a first user plane path is established between the terminal and the DN through a first network node, and the first user plane path and the second user plane path are used to establish the redundant transmission.

In an embodiment,
the first user plane path is established through the first access network device; or,
the first user plane path is established through a second access network device, and the second access network device is different from the first access network device.

According to an embodiment of the present application, a first access network device is provided. The first access network device includes: a memory, a transceiver, and a processor.
where the memory is used for storing a computer program; the transceiver is used for receiving and sending data under control of the processor; and the processor is used for reading the computer program in the memory and performing following operations:
in case that a terminal expects to establish a redundant transmission, determining a second network node, where a first user plane path is established between the terminal and a data network, DN, through a first network node; and
establishing a second user plane path between the terminal and the DN through the second network node, where the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, determining the second network node includes:
receiving information of at least one network node, and determining the second network node from the at least one network node based on the information of the at least one network node; or,
receiving information of the second network node sent from the terminal, and determining the second network node based on the information of the second network node.

In an embodiment, in case that the first user plane path is established through the first access network device, receiving the information of the at least one network node includes:
receiving the information of the at least one network node sent from the first network node; or,
receiving the information of the at least one network node sent from a centralized network node.

In an embodiment, the processor is further used for reading the computer program in the memory and performing following operations:
receiving capability information sent from the terminal, where the capability information indicates establishing the redundant transmission; and
determining, based on the capability information, that the terminal expects to establish the redundant transmission.

In an embodiment, in case that the first user plane path is established through the second access network device, the processor is further used for reading the computer program in the memory and performing following operations:
receiving a resource request sent from the second access network device, where the resource request is used to request allocation of resources for a protocol data unit, PDU, session corresponding to the second user plane path or a quality of service, QoS, flow corresponding to the second user plane path; and
sending, based on the resources, a first radio resource control, RRC, reconfiguration message to the second access network device, where the first RRC reconfiguration message is used to indicate the first access network device to establish a connection with the terminal.

In an embodiment, receiving the information of the at least one network node includes:
obtaining the information of the at least one network node based on the resource request sent from the second access network device; or,
receiving the information of the at least one network node sent from a centralized network node.

In an embodiment, the processor is further used for reading the computer program in the memory and performing following operations:
after establishing the connection with the terminal, determining that the terminal expects to establish the redundant transmission.

According to an embodiment of the present application, a terminal is provided. The terminal includes: a memory, a transceiver, and a processor.
where the memory is used for storing a computer program; the transceiver is used for receiving and sending data under control of the processor; and the processor is used for reading the computer program in the memory and performing following operations:
in case that the terminal expects to establish a redundant transmission, determining a second network node, where a first user plane path is established between the terminal and a DN through a first network node; and
sending information of the second network node to a first access network device, where the second network node is used by the first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, determining the second network node includes:
receiving information of at least one network node; and
determining the second network node from the at least one network node based on the information of the at least one network node.

In an embodiment, receiving the information of the at least one network node includes:
in case that the first user plane path is established through the first access network device, receiving the information of the at least one network node sent from the first access network device; or,
in case that the first user plane path is established through the second access network device, receiving the information of the at least one network node sent from the second access network device.

In an embodiment, in case that the first user plane path is established through the first access network device, the processor is further used for reading the computer program in the memory and performing following operations:
sending capability information to the first access network device, where the capability information is used to indicate establishing the redundant transmission.

In an embodiment, in case that the first user plane path is established through the second access network device, the processor is further used for reading the computer program in the memory and performing following operations:
sending capability information to the second access network device, where the capability information is used to indicate that the terminal supports dual connectivity.

In an embodiment, the processor is further used for reading the computer program in the memory and performing following operations:
receiving a second RRC reconfiguration message sent from the second access network device, where the second RRC reconfiguration message includes a first RRC reconfiguration message of the first access network device; and
establishing a connection with the first access network device based on the first RRC reconfiguration message.

According to an embodiment of the present application, a second access network device is provided. The second access network device includes: a memory, a transceiver, and a processor.
where the memory is used for storing a computer program; the transceiver is used for receiving and sending data under control of the processor; and the processor is used for reading the computer program in the memory and performing following operations:
in case that a terminal expects to establish a redundant transmission, receiving information of at least one network node, where a first user plane path is established between the terminal and a DN through a first network node; and
sending the information of the at least one network node, where the information of the at least one network node is used to determine a second network node, the second network node is used by the first access network device to establish a second user plane path between the terminal and the DN, and the first user plane path and the second user plane path are used to establish the redundant transmission.

In an embodiment,
the first user plane path is established through the first access network device; or,
the first user plane path is established through the second access network device, and the second access network device is different from the first access network device.

In an embodiment, receiving the information of the at least one network node includes:
receiving the information of the at least one network node sent from the first network node;
   or,
receiving the information of the at least one network node sent from a centralized network node.

In an embodiment, sending the information of the at least one network node includes:
sending the information of the at least one network node to the first access network device; or,
sending the information of the at least one network node to the terminal.

In an embodiment, the processor is further used for reading the computer program in the memory and performing following operations:
sending a resource request to the first access network device, where the resource request is used to request allocation of resources for a protocol data unit, PDU, session corresponding to the second user plane path or a QoS flow corresponding to the second user plane path; and
sending, based on the resources, a second RRC reconfiguration message to the terminal, where the second RRC reconfiguration message includes a first RRC reconfiguration message of the first access network device.

According to an embodiment of the present application, a first network node is provided. The first network node includes: a memory, a transceiver, and a processor.
where the memory is used for storing a computer program; the transceiver is used for receiving and sending data under control of the processor; and the processor is used for reading the computer program in the memory and performing following operations:
establishing a first user plane path between a terminal and a data network, DN;
in case that the terminal expects to establish a redundant transmission, obtaining information of at least one network node; and
sending the information of the at least one network node, where the at least one network node includes a second network node, the second network node is used by a first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, sending the information of the at least one network node includes:
sending the information of the at least one network node to the first access network device; or,
sending the information of the at least one network node to the second access network device.

According to an embodiment of the present application, a centralized network node is provided. The first network node includes: a memory, a transceiver, and a processor.
where the memory is used for storing a computer program; the transceiver is used for receiving and sending data under control of the processor; and the processor is used for reading the computer program in the memory and performing following operations:
in case that a terminal expects to establish a redundant transmission, obtaining information of at least one network node, where a first user plane path is established between the terminal and a data network, DN, through a first network node;
sending the information of the at least one network node, where the at least one network node includes a second network node, the second network node is used by a first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, sending the information of the at least one network node includes:
sending the information of the at least one network node to the first access network device; or,
sending the information of the at least one network node to the second access network device.

According to an embodiment of the present application, a second network node is provided. The second network node includes: a memory, a transceiver, and a processor.
where the memory is used for storing a computer program; the transceiver is used for receiving and sending data under control of the processor; and the processor is used for reading the computer program in the memory and performing following operations:
in case that a terminal expects to establish a redundant transmission, establishing a second user plane path between the terminal and a DN, where a first user plane path is established between the terminal and the DN through a first network node, and the first user plane path and the second user plane path are used to establish the redundant transmission.

In an embodiment,
the first user plane path is established through the first access network device; or,
the first user plane path is established through a second access network device, and the second access network device is different from the first access network device.

According to an embodiment of the present application, an apparatus for establishing redundant transmission for use in a first access network device is provided. The apparatus includes:
a first determining module, configured to in case that a terminal expects to establish a redundant transmission, determine a second network node, where a first user plane path is established between the terminal and a data network, DN, through a first network node; and
a processing module, configured to establish a second user plane path between the terminal and the DN through the second network node, where the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, the first determining module is configured to:
receive information of at least one network node, and determine the second network node from the at least one network node based on the information of the at least one network node; or,
receive information of the second network node sent from the terminal, and determine the second network node based on the information of the second network node.

In an embodiment, in case that the first user plane path is established through the first access network device, the first determining module is configured to:
receive the information of the at least one network node sent from the first network node; or,
receive the information of the at least one network node sent from a centralized network node.

In an embodiment, the first determining module is further configured to:
receive capability information sent from the terminal, where the capability information indicates establishing the redundant transmission; and
determine, based on the capability information, that the terminal expects to establish the redundant transmission.

In an embodiment, in case that the first user plane path is established through the second access network device, the processing module is configured to:
receive a resource request sent from the second access network device, where the resource request is used to request allocation of resources for a protocol data unit, PDU, session corresponding to the second user plane path or a quality of service, QoS flow corresponding to the second user plane path; and
sending, based on the resources, a first radio resource control, RRC, reconfiguration message to the second access network device, where the first RRC reconfiguration message is used to indicate the first access network device to establish a connection with the terminal.

In an embodiment, the first determining module is configured to:
obtain the information of the at least one network node based on the resource request sent from the second access network device; or,
receive the information of the at least one network node sent from a centralized network node.

In an embodiment, the first determining module is further configured to:
after establishing the connection with the terminal, determine that the terminal expects to establish the redundant transmission.

According to an embodiment of the present application, an apparatus for establishing redundant transmission for use in a terminal is provided, where a first user plane path is established between the terminal and a data network, DN through a first network node. The apparatus includes:
a second determining module, configured to in case that the terminal expects to establish a redundant transmission, determine a second network node; and
a first sending module, configured to send information of the second network node to a first access network device, where the second network node is used by the first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, the second determining module is configured to:
receive information of at least one network node; and
determine the second network node from the at least one network node based on the information of the at least one network node.

In an embodiment, the second determining module is configured to:
in case that the first user plane path is established through the first access network device, receive the information of the at least one network node sent from the first access network device; or,
in case that the first user plane path is established through the second access network device, receive the information of the at least one network node sent from the second access network device.

In an embodiment, in case that the first user plane path is established through the first access network device, the first sending module is further configured to:
send capability information to the first access network device, where the capability information is used to indicate establishing the redundant transmission.

In an embodiment, in case that the first user plane path is established through the second access network device, the first sending module is configured to:
send capability information to the second access network device, where the capability information is used to indicate that the terminal supports dual connectivity.

In an embodiment, the apparatus further includes an establishing module, and the establishing module is configured to:
receive a second radio resource control, RRC, reconfiguration message sent from the second access network device, where the second RRC reconfiguration message includes a first RRC reconfiguration message of the first access network device; and
establish a connection with the first access network device based on the first RRC reconfiguration message.

According to an embodiment of the present application, an apparatus for establishing redundant transmission for use in a second access network device is provided. The apparatus includes:
a receiving module, configured to in case that a terminal expects to establish a redundant transmission, obtain information of at least one network node, where a first user plane path is established between the terminal and a data network, DN through a first network node;
a second sending module, configured to send the information of the at least one network node, where the information of the at least one network node is used to determine a second network node, the second network node is used by the first access network device to establish a second user plane path between the terminal and the DN, and the first user plane path and the second user plane path are used to establish the redundant transmission.

In an embodiment,
the first user plane path is established through the first access network device; or,
the first user plane path is established through the second access network device, and the second access network device is different from the first access network device.

In an embodiment, the receiving module is configured to:
receive the information of the at least one network node sent from the first network node;
   or,
receive the information of the at least one network node sent from a centralized network node.

In an embodiment, the second sending module is configured to:
send the information of the at least one network node to the first access network device; or,
send the information of the at least one network node to the terminal.

In an embodiment, the second sending module is further configured to:
send a resource request to the first access network device, where the resource request is used to request allocation of resources for a protocol data unit, PDU session corresponding to the second user plane path or a quality of service, QoS flow corresponding to the second user plane path; and
send, based on the resources, a second radio resource control, RRC, reconfiguration message to the terminal, where the second RRC reconfiguration message includes a first RRC reconfiguration message of the first access network device.

According to an embodiment of the present application, an apparatus for establishing redundant transmission for use in a first network node is provided. The apparatus includes:
a first establishing module, configured to establish a first user plane path between a terminal and a data network, DN;
a first obtaining module, configured to in case that the terminal expects to establish a redundant transmission, obtain information of at least one network node; and
a third sending module, configured to send the information of the at least one network node, where the at least one network node includes a second network node, the second network node is used by a first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, the third sending module is configured to:
send the information of the at least one network node to the first access network device; or,
send the information of the at least one network node to the second access network device.

According to an embodiment of the present application, an apparatus for establishing redundant transmission for use in a centralized network node is provided. The apparatus includes:
a second obtaining module, configured to in case that a terminal expects to establish a redundant transmission, obtain information of at least one network node, where a first user plane path is established between the terminal and a data network, DN through a first network node; and
a fourth sending module, configured to send the information of the at least one network node, where the at least one network node includes a second network node, the second network node is used by a first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, the fourth sending module is configured to:
send the information of the at least one network node to the first access network device; or,
send the information of the at least one network node to the second access network device.

According to an embodiment of the present application, an apparatus for establishing redundant transmission for use in a second network node is provided. The apparatus includes:
a second establishing module, configured to in case that a terminal expects to establish a redundant transmission, establish a second user plane path between the terminal and a data network, DN, where a first user plane path is established between the terminal and the DN through a first network node, and the first user plane path and the second user plane path are used to establish the redundant transmission.

In an embodiment,
the first user plane path is established through the first access network device; or,
the first user plane path is established through a second access network device, and the second access network device is different from the first access network device.

According to an embodiment of the present application, a computer-readable storage medium is provided, where the computer-readable storage medium stores a computer program that cause a computer to perform any of the methods for establishing redundant transmission described above.

According to an embodiment of the present application, a method for establishing redundant transmission performed by a first access network device, a device and an apparatus are provided. In case that a terminal expects to establish a redundant transmission, a first access network device determines a second network node, where a first user plane path is established between the terminal and the DN through a first network node. Then, the first access network device establishes a second user plane path between the terminal and the DN through the second network node, where the first user plane path and the second user plane path are used to establish the redundant transmission. The solution of the embodiments of the present application is based on a distributed network architecture. A first user plane path is established between the terminal and the DN through a first network node, and a second user plane path is established between the terminal and the DN through a second network node. As such, two different user plane paths are established based on two different network nodes, realizing the redundant transmission of the terminal.

### BRIEF DESCRIPTION OF THE DRAWINGS

In order to clearly illustrate the solutions according to the embodiments of the present application, the accompanying drawings used in the description of the embodiments are briefly introduced below. It should be noted that the drawings in the following description are only some embodiments of the present application. For those skilled in the art, other drawings may be obtained according to these drawings without creative efforts.
FIG. 1 is a first schematic diagram of establishing a redundant transmission according to an embodiment of the present application;
FIG. 2 is a second schematic diagram of establishing a redundant transmission according to an embodiment of the present application;
FIG. 3 is a third schematic diagram of establishing a redundant transmission according to an embodiment of the present application;
FIG. 4 is a fourth schematic diagram of establishing a redundant transmission according to an embodiment of the present application;
FIG. 5 is a schematic diagram of a distributed network architecture according to an embodiment of the present application;
FIG. 6 is a schematic flowchart of a method for establishing redundant transmission according to an embodiment of the present application;
FIG. 7 is a first schematic diagram of establishing a redundant transmission in a distributed network node according to an embodiment of the present application;
FIG. 8 is a first schematic flowchart of establishing a redundant transmission in a distributed network node according to an embodiment of the present application;
FIG. 9 is a second schematic diagram of establishing a redundant transmission in a distributed network node according to an embodiment of the present application;
FIG. 10 is a second schematic flowchart of establishing a redundant transmission in a distributed network node according to an embodiment of the present application;
FIG. 11 is a schematic structural diagram of a first access network device according to an embodiment of the present application;
FIG. 12 is a schematic structural diagram of a terminal according to an embodiment of the present application;
FIG. 13 is a schematic structural diagram of a second access network device according to an embodiment of the present application;
FIG. 14 is a schematic structural diagram of a first network node according to an embodiment of the present application;
FIG. 15 is a schematic structural diagram of a centralized network node according to an embodiment of the present application;
FIG. 16 is a schematic structural diagram of a second network node according to an embodiment of the present application;
FIG. 17 is a first schematic structural diagram of an apparatus for establishing redundant transmission according to an embodiment of the present application;
FIG. 18 is a second schematic structural diagram of an apparatus for establishing redundant transmission according to an embodiment of the present application;
FIG. 19 is a third schematic structural diagram of an apparatus for establishing redundant transmission according to an embodiment of the present application;
FIG. 20 is a fourth schematic structural diagram of an apparatus for establishing redundant transmission according to an embodiment of the present application;
FIG. 21 is a fifth schematic structural diagram of an apparatus for establishing redundant transmission according to an embodiment of the present application; and
FIG. 22 is a sixth schematic structural diagram of an apparatus for establishing redundant transmission according to an embodiment of the present application.

### DETAILED DESCRIPTION

In order to make the purpose, solutions and advantages of the present application clearer, the solutions according to the present application are clearly and completely described below in combination with the accompanying drawings in the present application. It should be noted that the described embodiments are some embodiments of the present application, rather than all the embodiments. Based on the embodiments of the present application, all other embodiments obtained by those skilled in the art without creative effort are within the scope of protection of the present application.

In a radio communication system, a terminal may improve transmission reliability by establishing a redundant transmission. For example, in a scenario of ultra-high reliability and low-latency communication, the terminal may establish the redundant transmission to transmit same business traffic and achieve high-reliability transmission. The redundant transmission may include session redundancy, tunnel redundancy, transmission layer redundancy, etc., which are introduced below in combination with the accompanying drawings.

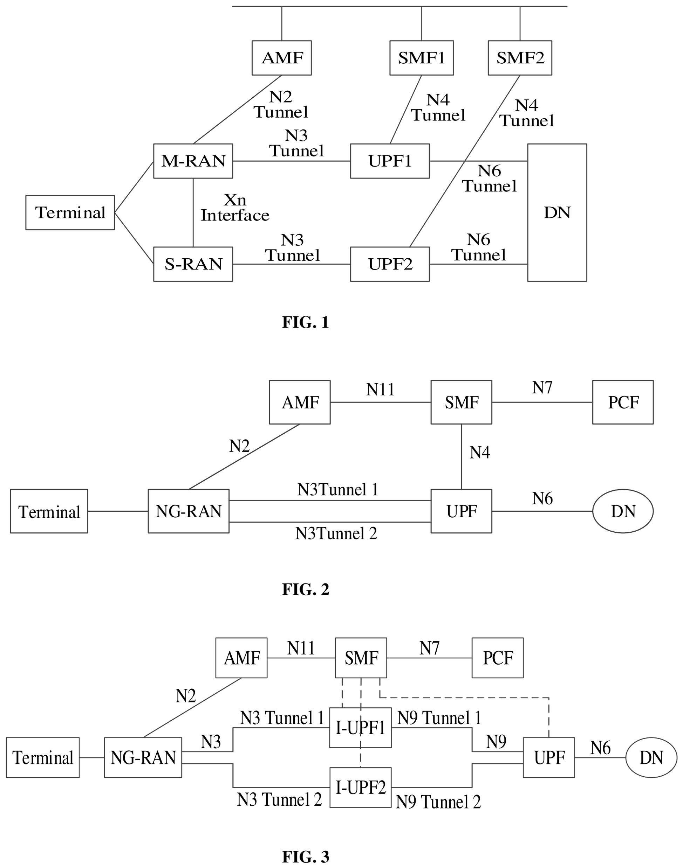

FIG. 1 is a first schematic diagram of establishing a redundant transmission according to an embodiment of the present application. As shown in FIG. 1, a procedure for establishing an end-to-end redundant user plane path based on dual connectivity is provided.

To support a highly reliable ultra-reliable low-latency communications (URLLC) service, the terminal may establish two redundant protocol data unit (PDU) sessions on a fifth generation (5G) network, so that the 5G system (5GS) sets user plane paths of the two redundant PDU sessions to be disjoint. The way of establishing the redundant transmission is called session redundancy, that is, redundancy of data connection sessions. A subscription indication of the terminal indicates whether the terminal is allowed to have the redundant PDU sessions, and the indication is provided from a unified data management (UDM) to a session management function (SMF).

FIG. 1 illustrates a dual PDU session when redundancy is applied. One PDU session spans from the terminal via a master access network equipment (master random access network, RAN, M-RAN) to user plane function 1 (UPF1) acting as a PDU session anchor, and another PDU session spans from the terminal via a secondary access network equipment (Secondary RAN, S-RAN) to user plane function 2 (UPF2) acting as a PDU session anchor. Based on the two PDU sessions, two independent paths are established. UPF1 and UPF2 are connected to a same data network (DN), and the traffic passing through UPF1 and UPF2 may be routed through different user plane nodes within the DN. The redundant user plane applies to an internet protocol (IP) session and an Ethernet PDU session.

In the above embodiments, one solution for establishing a redundant transmission is introduced in combination with FIG. 1. Another solution for establishing a redundant transmission is introduced below in in combination with FIG. 2 and FIG. 3.

FIG. 2 is a second schematic diagram of establishing a redundant transmission according to an embodiment of the present application. As shown in FIG. 2, a procedure of a redundant transmission supported by an N3/N9 interface is provided.

In case that reliability of a next generation radio access network (NG-RAN) node, a user plane function (UPF) and a policy control function (PCF) is high enough to meet the reliability requirements of the URLLC service served by network functions (NFs), but reliability of a single N3 tunnel is considered not high enough (for example, due to deployment environment of a backhaul network), the redundant transmission may be deployed between the PDU session anchor (PSA) UPF and an RAN through two separate N3 tunnels (i.e., N3 Tunnel 1 and N3 Tunnel 2) on different transmission layer paths. The tunnels are associated with a single PDU session to enhance reliability.

To ensure that the two N3 tunnels are transmitted on disjoint transmission layer paths, the NG-RAN node, SMF or PSA UPF should provide different routing information (e.g., different IP addresses or different network instances) in tunnel information, and the routing information should be mapped to disjoint transmission layer paths based on network deployment configuration.

In one implementation, two intermediate UPFs (I-UPFs) between the PSA UPF and the NG-RAN may be used to support the redundant transmission based on two N3 tunnels and two N9 tunnels between a single NG-RAN node and the PSA UPF. The RAN nodes and the PSA UPFs should support packet replication and elimination functions as described above.

FIG. 3 is a third schematic diagram of establishing a redundant transmission according to an embodiment of the present application. As shown in FIG. 3, a procedure of redundant transmission supported by an N3/N9 interface is provided.

In FIG. 3, there are two N3 and two N9 tunnels between NG-RAN and PSA UPF, which are used for the redundant transmission in the same PDU session. The PSA UPF replicates downlink packets of the quality of service (QoS) flow from the DN and allocates the downlink packets a same general packet radio service (GPRS) tunnelling protocol for the user plane (GTP-U) sequence number. The duplicate packets are transmitted to I-UPF1 and I-UPF2 through N9 tunnel 1 and N9 tunnel 2 respectively. Each I-UPF forwards the packets using a same GTP-U sequence number, and the sequence number is received at the NG-RAN from the PSA UPF via N3 Tunnel 1 and N3 Tunnel 2, respectively. NG-RAN eliminates duplicate packets based on the GTP-U sequence number.

In case of uplink service, the NG-RAN replicates the packets of the QoS flow from the terminal and allocates the same GTP-U sequence number to the packets. The duplicate packets are transmitted to I-UPF1 and I-UPF2 through N3 tunnel 1 and N3 tunnel 2 respectively. Each I-UPF forwards the packets using a same GTP-U sequence number, and the sequence number is received at the PSA-UPF from the NG UPF via N9 Tunnel 1 and N9 Tunnel 2, respectively. PSA-UPF eliminates duplicate packets based on the GTP-U sequence number.

FIG. 2 and FIG. 3 illustrate a way of tunnel redundancy, that is, there are two user-plane transmission tunnels with the same data between the radio access network device and the user plane data grid, which correspond to the same QoS flow in the data connection session, and form two mutually redundant transmission paths at a transmission tunnel-level.

In the above embodiments, two solutions for establishing a redundant transmission is introduced in combination with FIG. 1 to FIG. 3. Another solution for establishing a redundant transmission is introduced below, which supports the redundant transmission at the transmission layer.

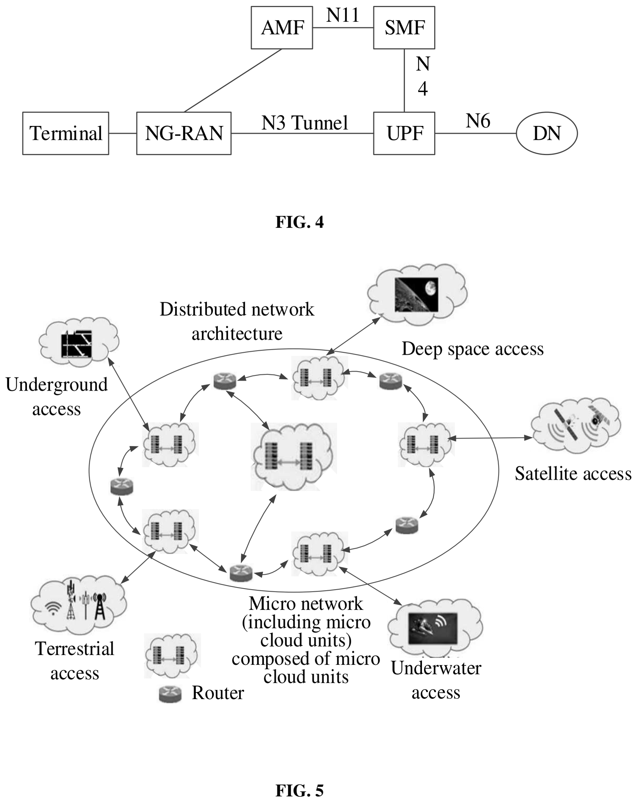

FIG. 4 is a fourth schematic diagram of establishing a redundant transmission according to an embodiment of the present application. As shown in FIG. 4, a redundant transmission at the transmission layer means that there are two transmission layer paths corresponding to the data connection session between the radio access network device and the user plane data grid to transmit the same data, that is, all service traffic in the data connection session is redundantly transmitted through the two transmission layer paths respectively, forming two mutually redundant transmission paths data at a data connection session level.

Redundant transmission may be supported within the 5GS. There is no need to support protocols, such as an institute of electrical and electronics engineers (IEEE) FRER in the application layer (DN only). It may also support more than N3 without redundant GTP-U tunnels. Backhaul provides two transmission paths between UPF and NG-RAN. Redundant functions in NG-RAN and UPF utilize separate paths at the transmission layer. Supporting the redundant transmission at the transmission layer requires no protocol. Steps are as follows.

1. The terminal establishes a PDU session for the URLLC service. Based on a data network name (DNN), single network slice selection assistance information (S-NSSAI), and other factors, an SMF selects a UPF that supports a redundancy function for a PDU session. An N3 GTP-U tunnel is established between the UPF and NG-RAN.

For a downlink data transmission, the UPF sends downlink data packets on the N3 GTP-U tunnel. The redundancy function in the UPF replicates the downlink data on the transmission layer. The redundancy function in NG-RAN eliminates duplicate downlink data received and remaining data are sent to the NG-RAN.

3. For uplink data transmission, NG-RAN sends the received uplink packets on the N3 GTP-U tunnel, and the redundancy function in NG-RAN performs redundant processing on the backhaul transmission layer. The redundancy function in NG-UPF eliminates duplicate uplink data received and remaining data are sent to the UPF.

An important trend in the development of sixth generation (6G) networks is centralized and distributed network architecture. Initial designs of 5G and previous generations of network architecture are centralized. With the development of the network, facing dual driving forces of service scenarios and technological development, architecture designs of 6G networks needs to consider a distributed architecture, and a control plane of a 6G network architecture gradually evolve towards distributed. With distributed development of intelligence and cloud computing, new connections and new networks may also be required to be distributed.

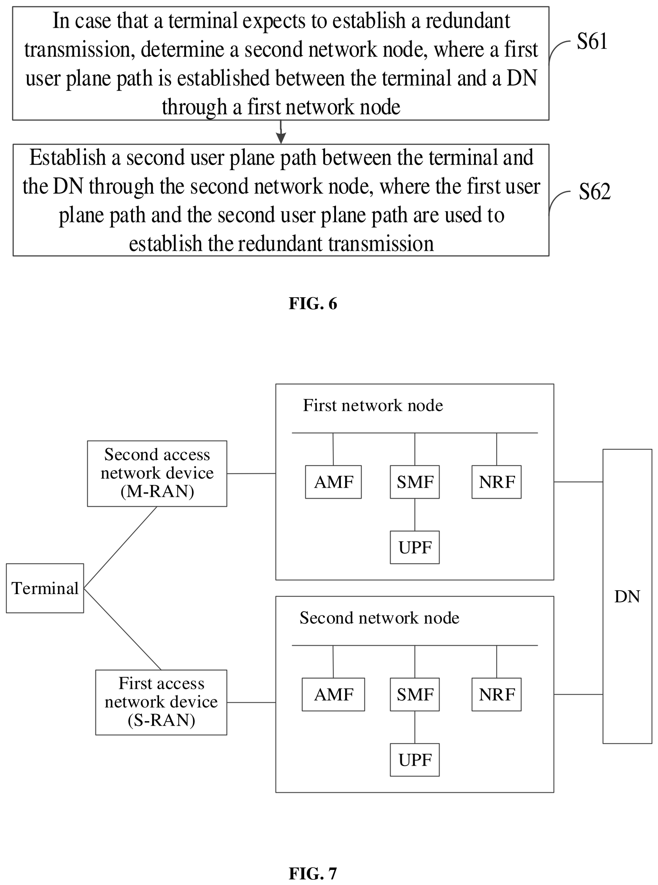

FIG. 5 is a schematic diagram of a distributed network architecture according to an embodiment of the present application. As shown in FIG. 5, 6G may be oriented towards diverse scenarios and network requirements in air, space, land, and sea, and a centralized network architecture may not uniformly meet all scenarios. To meet the challenge, the 6G network architecture needs to go beyond centralized control and gradually evolve towards a distributed architecture, extending more network functions (such as authentication) to an edge of the network and establishing distributed homogeneous micro-cloud units with different functional levels.

In the distributed network architecture shown in FIG. 5, each micro-cloud unit is self-contained and has complete control functions and data forwarding functions. Multiple micro-cloud units may form an autonomous micro-network according to business needs, and provide targeted network services based on specific business scenarios, user scale, geographical environment and other requirements. The micro-cloud units are also called distributed network nodes, representing an on-demand or fully functional core network.

In summary, traditionally, procedures of establishing the redundant transmissions by a terminal are all performed based on a single network node. The terminal may be connected to two RANs, and two base stations may be connected to one network node simultaneously. Then, the terminal initiates a dual PDU session, and establishes two separate and disjoint user plane paths to the same DN through the two RANs. Alternatively, a redundant transmission may be a redundant transmission in case that there are two N3 tunnels between a user plane function (UPF) and a single RAN node in a single PDU session. Alternatively, a redundant transmission may be a redundant transmission in case that there are two N3 tunnels and two N9 tunnels between the RAN and the UPF.

The solution for establishing a redundant transmission is not applicable to the distributed network architecture shown in FIG. 5. A solution for establishing a redundant transmission is provided according to an embodiment of the present application, which implements a redundant transmission establishment procedure based on dual network nodes in a distributed network architecture. The solutions of the embodiments of the present application are described below in combination with the accompanying drawings.

FIG. 6 is a schematic flowchart of a method for establishing redundant transmission according to an embodiment of the present application. The method is performed by a first access network device. As shown in FIG. 6, the method includes following steps.

S61, in case that a terminal expects to establish a redundant transmission, determine a second network node, where a first user plane path is established between the terminal and a DN through a first network node.

The user plane path between the terminal and the DN refers to the procedure by which the terminal establishes a connection to the DN through access network devices and network nodes. According to an embodiment of the present application, a first user plane path is established between the terminal and the DN through the first network node.

In an embodiment, the first user plane path established between the terminal and the DN may be established through the first access network device and the first network node, or through the second access network device and the first network node, which is not limited in the embodiments of the present application.

In case that the terminal expects to establish the redundant transmission, the first access network device determines a second network node, where the second network node is a network node different from the first network node. The first access network device may determine the second network node from multiple network nodes based on information of the multiple network nodes, or the terminal may determine the second network node from multiple network nodes based on information of the multiple network nodes and send information of the second network node to the first access network device, and the first access network device may determine the second network node based on the information of the second network node, and so on.

S62, establish a second user plane path between the terminal and the DN through the second network node, and the first user plane path and the second user plane path are used to establish the redundant transmission.

After the first access network device determines the second network node, a second user plane path is established between the terminal and the DN through the second network node. The second user plane path and the first user plane path are two different user plane paths.

After the second user plane path is established between the terminal and the DN through the second network node, there are two user plane paths between the terminal and the DN, one is the first user plane path established through the first network node, and the other is the second user plane path established through the second network node. The first user plane path and the second user plane path are used to establish the redundant transmission.

According to an embodiment of the present application, a method for establishing redundant transmission performed by a first access network device is provided. In case that a terminal expects to establish a redundant transmission, a first access network device determines a second network node, where a first user plane path is established between the terminal and the DN through a first network node. Then, the first access network device establishes a second user plane path between the terminal and the DN through the second network node, where the first user plane path and the second user plane path are used to establish the redundant transmission. The solution of the embodiments of the present application is based on a distributed network architecture. A first user plane path is established between the terminal and the DN through a first network node, and a second user plane path is established between the terminal and the DN through a second network node. As such, two different user plane paths are established based on two different network nodes is realized, realizing the redundant transmission of the terminal.

Based on any of the above embodiments, the solutions of the embodiments of the present application are further described below in combination with the accompanying drawings. It should be noted that the first network node in the embodiments of the present application may be a centralized network node or a distributed network node; the second network node may be a centralized network node or a distributed network node, which are not limited in embodiments of the present application. Any network node may include an access and mobility management function (AMF), an SMF, a network repository function (NRF) and a UPF.

According to embodiments of the present application, a first user plane path is established between the terminal and the DN through the first network node.

In an embodiment, the first user plane path is established through the first access network device, that is, the first user plane path is a user plane path from the terminal, the first access network device, the first network node to the DN. The first access network device is the RAN.

In an embodiment, the first user plane path is established through the second access network device, that is, the first user plane path is a user plane path from the terminal, the second access network device, the first network node to the DN. The first access network device is different from the second access network device. The first access network device is S-RAN, and the second access network device is M-RAN.

In an embodiment, the terminal may first access a second access network device (ie, RAN) as the M-RAN. The M-RAN selects a network node (ie, the first network node) and establishes a connection to the DN. At the same time, information of a neighboring network node of the current network node is fed back to the M-RAN. In case that the capability information reporting of the terminal indicates that the terminal supports dual connectivity, M-RAN may configure measurement configurations (such as measuring cell signal strength, signal quality, computing power, etc.) for the terminal and indicate the terminal to perform the measurement. In case that the terminal reports the measurement results, the M-RAN may select, based on the measurement results reported by the terminal, a first access network device (i.e., S-RAN) connected to the same DN. The M-RAN then sends an establishment request and other interface procedures to the selected S-RAN on the interface, where the carried information includes information of the neighboring network node. The S-RAN may send an RRC reconfiguration command to the M-RAN, then the M-RAN may forward the RRC reconfiguration command to the terminal. After receiving the S-RAN configuration, the terminal may start random access to the S-RAN. Then the terminal or S-RAN may select a network node to connect to the DN based on the received network node information. The implementation is described below in combination with the accompanying drawings.

FIG. 7 is a first schematic diagram of establishing a redundant transmission in a distributed network node according to an embodiment of the present application. As shown in FIG. 7, the distributed network includes a terminal, a first access network device, a second access network device, a first network node, a second network node and a DN.

In an example of Figure 7, the terminal establishes a connection with the second access network device, the second access network device selects the first network node, and establishes a first user plane path between the terminal and the DN through the first network node. The second access network device is M-RAN. Further, the terminal may also establish a connection with the first access network device, ie, establish a dual connectivity, and the first access network device is the S-RAN. The first access network device selects a second network node and establishes a second user plane path between the terminal and the DN through the second network node.

It should be noted that before establishing the second user plane path through the second network node, the second network node needs to be determined first.

First, information of at least one network node needs to be obtained. The information of the at least one network node may be obtained by the first network node, and the at least one network node is a neighboring network node of the first network node; or the information of the at least one network node may be obtained by the centralized network node, and the at least one network node is a distributed network node managed by the centralized network node.

After the first network node obtains the information of at least one network node, the first network node may send the information of the at least one network node to the second access network device, and the second access network device may send the information of the at least one network node to the terminal. Then, the terminal may select a second network node from the at least one network node based on the information of the at least one network node, and send the information of the second network node to the first access network device. After receiving the information of the second network node sent from the terminal, the first access network device may determine the second network node based on the information of the second network node.

After obtaining the information of the at least one network node, the centralized network node may send the information of the at least one network node to the second access network device. The second access network device sends the information of the at least one network node to the terminal. The terminal then selects a second network node from the at least one network node based on the information of the at least one network node and sends the information of the second network node to the first access network device. After receiving the information of the second network node sent from the terminal, the first access network device may determine the second network node based on the information of the second network node.

After obtaining the information of the at least one network node, the centralized network node may send the information of the at least one network node to the first access network device. The first access network device selects a second network node from the at least one network node based on the information of the at least one network node.

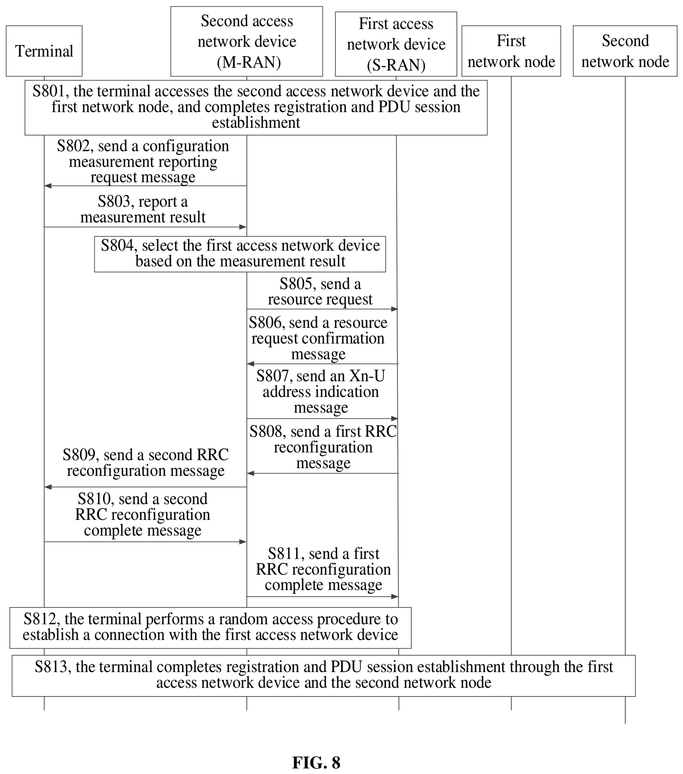

An implementation solution for establishing a first user plane path and a second user plane path between a terminal and a DN in a dual connectivity scenario is described below in combination with FIG. 8.

FIG. 8 is a first schematic flowchart of establishing a redundant transmission in a distributed network node according to an embodiment of the present application. As shown in FIG. 8, the method includes following steps.

S801, the terminal accesses the second access network device and the first network node, and completes registration and PDU session establishment.

According to an embodiment of the present application, the terminal establishes a connection with the second access network device, and the terminal establishes a first user plane path between the terminal and the DN through the second access network device and the first network node. During the procedure of establishing the first user plane path, the terminal may send capability information to the second access network device, where the capability information is used to indicate that the terminal supports dual connectivity.

S802, the second access network device sends a configuration measurement reporting request message to the terminal.

During the procedure of establishing the first user plane path, the second access network device may receive capability information reported by the terminal, and determine whether the terminal supports dual connectivity based on the capability information, so that the second access network device sends a configuration measurement reporting request message to the terminal, where the configuration measurement reporting request message is used to indicate the terminal to perform signal measurement. In an embodiment, the configuration measurement reporting request message may include information such as the signal to be measured and the parameters to be measured.

S803, the terminal reports a measurement result to the second access network device.

After receiving the configuration measurement reporting request message sent from the second access network device, the terminal measures the signal based on the configuration measurement reporting request message. For example, the terminal may measure signal strength, signal quality, computing power, etc. of a cell where the terminal is located, and the terminal may also measure signal strength, signal quality, computing power, etc. of a neighboring cell of the cell where the terminal is located, and then obtain the measurement result. After obtaining the measurement result, the terminal reports the measurement result to the second access network device.

S804, the second access network device selects the first access network device based on the measurement result.

After receiving the measurement result reported by the terminal, the second access network device selects, based on the measurement result, the first access network device from the multiple access network devices as the access network device for establishing a connection with the terminal.

S805, the second access network device sends a resource request to the first access network device.

After determining the first access network device, the second access network device sends a resource request to the first access network device, where the resource request is used to request allocation of resources for a PDU session corresponding to the second user plane path or a QoS flow corresponding to the second user plane path.

In an embodiment, the second access network device requests the first access network device to allocate resources for one or more specific PDU sessions or QoS flows through a resource request, indicating QoS flow characteristics. QoS flow characteristics may, for example, include at least one of a QoS flow level, a QoS parameter, PDU session level transmission network layer (TNL) address information, PDU session level network slice information, or information of at least one network node. In an embodiment, the information of the network node includes at least one of an identifier of the network node, an identifier of an NF in the network node, a DN to which the network node is connected, or computing power of the network node. In an embodiment, information such as the identifier of the network node and the computing power of the network node may be obtained by the second access network device from the first network node or the centralized network node.

S806, the first access network device sends a resource request confirmation message to the second access network device.

After receiving the resource request sent from the second access network device, in case that the radio resource management (RRM) entity in the first access network device may accept the resource request, the first access network device allocates corresponding radio resources based on the resource request and allocates corresponding transmission network resources based on bearer type options. After the allocation is completed, the first access network device sends a resource request confirmation message to the second access network device.

S807, the second access network device sends an Xn-U address indication message to the first access network device.

For a first access network device terminated bearer using MCG resources, the second access network device provides Xn-User plane (Xn-U) downlink TNL address information in an Xn-U address indication message.

S808, the first access network device sends a first radio resource control (RRC) reconfiguration message to the second access network device.

The first access network device sends a first RRC reconfiguration message to the second access network device based on resources of the PDU session corresponding to the second user plane path or QoS flow corresponding to the second user plane path. The first RRC reconfiguration message is an RRC reconfiguration message of the first access network device, and is used to indicate the first access network device to establish a connection with the terminal.

S809, the second access network device sends a second RRC reconfiguration message to the terminal.

After receiving the first RRC reconfiguration message sent from the first access network device, the second access network device sends the second RRC reconfiguration message to the terminal based on the resources of the PDU session corresponding to the second user plane path or QoS flow corresponding to the second user plane path, and the second RRC reconfiguration message includes the first RRC reconfiguration message of the first access network device.

In an embodiment, the second RRC reconfiguration message includes information of at least one network node, where the at least one network node is a neighboring network node of the first network node. In an embodiment, the first network node may obtain information of the neighboring network node of the first network node, and send the information of the neighboring network node of the first network node to the second access network device. Then, the second access network device sends the information of the neighboring network node of the first network node to the terminal through a second RRC reconfiguration message. In the second RRC reconfiguration message, the second access network device may indicate that a secondary cell group (SCG) is deactivated.

S810, the terminal sends a second RRC reconfiguration complete message to the second access network device.

If necessary, the terminal applies the new configuration and sends a second RRC reconfiguration complete message to the second access network device, where the second RRC reconfiguration complete message includes the first RRC reconfiguration complete message of the first access network device. In case that the terminal does not comply with the configuration (part) included in the second RRC reconfiguration message, the terminal may perform a reconfiguration failure process.

S811, the second access network device sends a first RRC reconfiguration complete message to the first access network device.

In case that the second access network device receives a second RRC reconfiguration complete message from the terminal, the second access network device sends a first RRC reconfiguration complete message to the first access network device, and notifies the first access network device that the terminal has successfully completed the reconfiguration procedure.

S812, the terminal performs a random access procedure to establish a connection with the first access network device.

The terminal establishes a connection with the first access network device based on the first RRC reconfiguration message, that is, establishes a connection with the first access network device through a random access procedure. Since the terminal has established a connection with the second access network device, after the terminal establishes a connection with the first access network device, the terminal completes the dual connectivity, and subsequently establishes two different user plane paths through two different access network devices and two different network nodes.

According to an embodiment of the present application, the order in which the terminal sends the first RRC reconfiguration complete message and performs the random access procedure is not limited. The first RRC reconfiguration complete message may be sent and the random access procedure may be performed simultaneously. The first RRC reconfiguration complete message may be sent first and then the random access procedure may be performed, or the random access procedure may be performed first and then the first RRC reconfiguration complete message may be sent. The terminal successfully completes the RRC connection reconfiguration procedure and does not need to successfully perform the random access procedure.

S813, the terminal completes registration and PDU session establishment through the first access network device and the second network node.

For the first access network device, in case that the terminal has established a connection with the first access network device, the first access network device may determine that the terminal expects to establish the redundant transmission. After the terminal establishes a connection with the first access network device, the terminal may establish a second user plane path through the first access network device and the second network node, completing registration and PDU session establishment.

In the above S801-S812, the procedure of establishing a connection between the terminal and the first access network device is introduced. In case that the terminal establishes a connection with the first access network device, the first access network device also needs to determine the second network node before establishing a second user plane path between the terminal and the DN through the second network node.

The first access network device may receive information of at least one network node, and then determine a second network node from the at least one network node based on the information of the at least one network node. The first access network device may also receive information of the second network node sent from the terminal, and determine the second network node based on the information of the second network node. The modes 1.1 to 1.4 are introduced below as examples.

Mode 1.1: in an embodiment, in case that the terminal expects to establish a redundant transmission, the first network node may obtain information of at least one network node, and then send the information of the at least one network node to the second access network device. In an embodiment, the at least one network node is a neighboring network node of the first network node.

Then, the second access network device sends a resource request to the first access network device based on the information of the at least one network node, where the resource request includes the information of the at least one network node. The first access network device obtains information of the at least one network node based on the resource request sent from the second access network device. Among the at least one network node, the first access network device selects and determines a second network node, where the second network node is one of the at least one network node.

Mode 1.2: in an embodiment, in case that the terminal expects to establish a redundant transmission, the centralized network node may obtain information of at least one network node, and then send the information of the at least one network node to the first access network device. In an embodiment, the at least one network node is a distributed network node managed and controlled by a centralized network node.

Then, the first access network device selects and determines a second network node from the at least one network node based on the information of the at least one network node, where the second network node is one of the at least one network node.

Mode 1.3: in an embodiment, in case that the terminal expects to establish a redundant transmission, the first network node may obtain information of at least one network node, and then send the information of the at least one network node to the second access network device. In an embodiment, the at least one network node is a neighboring network node of the first network node.

Then, the second access network device sends the information of the at least one network node to the terminal. After receiving the information of the at least one network node, the terminal determines a second network node from the at least one network node based on the information of the at least one network node, and sends the information of the second network node to the first access network device. After receiving the information of the second network node sent from the terminal, the first access network device determines the second network node based on the information of the second network node.

Mode 1.4: in an embodiment, in case that the terminal expects to establish a redundant transmission, the centralized network node may obtain information of at least one network node, and then send the information of the at least one network node to the second access network device. In an embodiment, the at least one network node is a distributed network node managed and controlled by a centralized network node.

Then, the second access network device sends the information of the at least one network node to the terminal, and the terminal determines the second network node based on the information of the at least one network node and sends the information of the second network node to the first access network device. The second network node is one of the at least one network node. After receiving the information of the second network node, the first access network device may determine the second network node based on the information of the second network node.

In an embodiment, in the modes 1.1 to 1.4, the information of the network node may include at least one of an identifier of the network node, an identifier of an NF in the network node, a DN to which the network node is connected, or computing power of the network node.

In the above embodiments, a solution for establishing a redundant transmission is introduced in combination with FIG. 7 and FIG. 8. In order to support highly reliable URLLC services, the terminal may establish two redundant PDU sessions on the distributed network, so that the distributed network sets the user plane paths of the two redundant PDU sessions to be disjoint. The solution is a solution of the redundant transmission based on dual connectivity, that is, the terminal accesses two different network nodes through two different access network devices, and then establishes a user plane path to the DN. Another redundant transmission solution is introduced below in combination with the accompanying drawings.

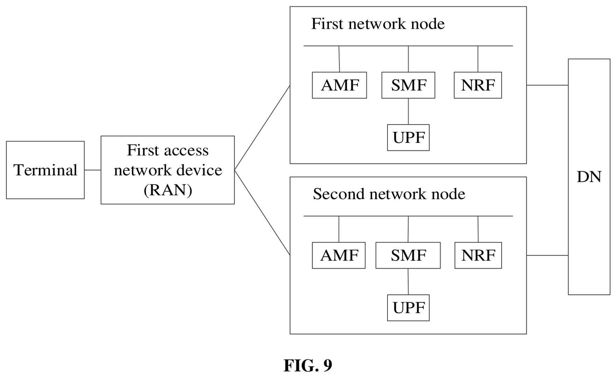

FIG. 9 is a second schematic diagram of establishing a redundant transmission in a distributed network node according to an embodiment of the present application. As shown in FIG. 9, the distributed network includes a terminal, a first access network device, a first network node, a second network node and a DN.

The terminal establishes a connection with the first access network device, and the first access network device establishes a first user plane path between the terminal and the DN through the second network node. The first access network device establishes a second user plane path between the terminal and the DN through the first network node. The first access network device is RAN.

It should be noted that before establishing the second user plane path through the second network node, the second network node needs to be determined first.

First, information of at least one network node needs to be obtained. The information of the at least one network node may be obtained by the first network node, and the at least one network node is a neighboring network node of the first network node; or the information of the at least one network node may be obtained by the centralized network node, and the at least one network node is a distributed network node managed and controlled by the centralized network node.

After the first network node obtains information of at least one network node, the first network node may send the information of the at least one network node to the first access network device. The first access network device selects a second network node from the at least one network node based on the information of the at least one network node.

After the first network node obtains the information of at least one network node, the first network node may send the information of the at least one network node to the first access network device, and the first access network device may send the information of the at least one network node to the terminal. Then, the terminal may select a second network node from the at least one network node based on the information of the at least one network node, and send the information of the second network node to the first access network device. After receiving the information of the second network node sent from the terminal, the first access network device may determine the second network node based on the information of the second network node.

After the centralized network node obtains information of at least one network node, the centralized network node may send the information of the at least one network node to the first access network device. The first access network device selects a second network node from the at least one network node based on the information of the at least one network node.

After the centralized network node obtains the information of the at least one network node, the centralized network node may send the information of the at least one network node to the first access network device. The first access network device sends the information of the at least one network node to the terminal. The terminal then selects a second network node from the at least one network node based on the information of the at least one network node and sends the information of the second network node to the first access network device. After receiving the information of the second network node sent from the terminal, the first access network device may determine the second network node based on the information of the second network node.

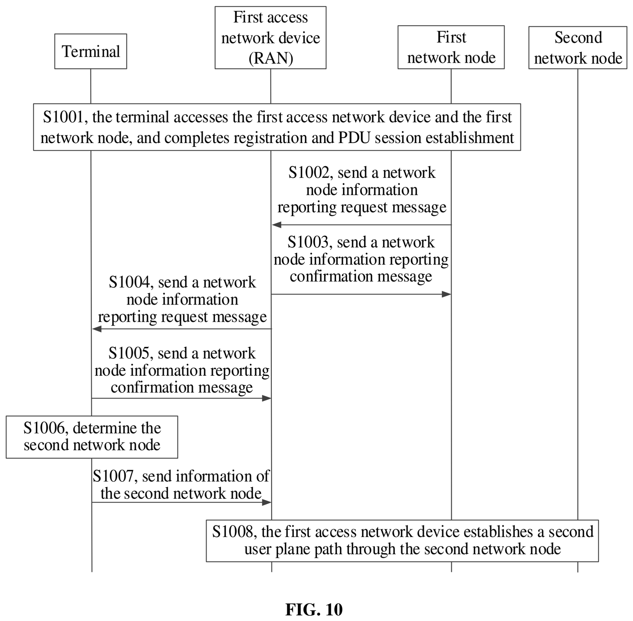

An implementation solution for establishing a first user plane path and a second user plane path between a terminal and a DN in a single connectivity scenario is described below in combination with FIG. 10.

FIG. 10 is a second schematic flowchart of establishing a redundant transmission in a distributed network node according to an embodiment of the present application. As shown in FIG. 10, the method includes following steps.

S1001, the terminal accesses the first access network device and the first network node, and completes registration and PDU session establishment.

According to an embodiment of the present application, the terminal establishes a connection with the first access network device, and the terminal establishes a first user plane path between the terminal and the DN through the first access network device and the first network node. In the procedure of establishing the first user plane path, the terminal may send capability information to the first access network device. The capability information is used to indicate establishing the redundant transmission, that is, requiring to establish user plane path redundant transmission with other network nodes for the PDU session. After receiving the capability information of the terminal, the first access network device determines that the terminal expects to establish the redundant transmission.

S1002, the first network node sends a network node information reporting request message to the first access network device.

After the terminal reports the capability information to the first access network device, the first access network device may report the capability information to the first network node, indicating the first network node to provide information of a neighboring network node of the first network node.

In an embodiment, in case that the terminal expects to establish the redundant transmission, the first network node obtains information of at least one network node. In an embodiment, the at least one network node is a neighboring network node of the first network node. In an embodiment, the information of the network node includes at least one of an identifier of the network node, an identifier of an NF in the network node, a DN to which the network node is connected, or computing power of the network node. The at least one network node includes a second network node, and the second network node is used for the first access network device to establish a second user plane path between the terminal and the DN. The first user plane path and the second user plane path are used to establish the redundant transmission.

After the first network node obtains the information of at least one network node, the information of the at least one network node may be carried through a network node information reporting request message. The first network node sends a network node information reporting request to the first access network device, thereby sending the information of the at least one network node to the first access network device.

In case that the terminal expects to establish the redundant transmission, the centralized network node obtains information of at least one network node. In an embodiment, the at least one network node is a distributed network node under the centralized network node. In an embodiment, the information of the network node includes at least one of an identifier of the network node, an identifier of an NF in the network node, a DN to which the network node is connected, or computing power of the network node. The at least one network node includes a second network node, and the second network node is used for the first access network device to establish a second user plane path between the terminal and the DN. The first user plane path and the second user plane path are used to establish the redundant transmission.

S1003, the first access network device sends a network node information reporting confirmation message to the first network node.

After the first access network device receives the information of at least one network node sent from the first network node, the first access network device may send a network node information reporting confirmation message to the first network node to indicate the first network node that the first access network device has received the information of the at least one network node.

S 1004, the first access network device sends a network node information reporting request message to the terminal.

After the first access network device obtains the information of at least one network node, the information of the at least one network node may be carried through a network node information reporting request message. The first access network device sends a network node information reporting request to the terminal, thereby sending the information of the at least one network node to the terminal.

S1005, the terminal sends a network node information reporting confirmation message to the first access network device.

After receiving the information of at least one network node sent from the first access network device, the terminal may send a network node information reporting confirmation message to the first access network device to indicate the first access network device that the terminal has received the information of the at least one network node.

S1006, the terminal determines the second network node.

After receiving the information of the at least one network node, the terminal may determine the second network node from the at least one network node based on the information of the at least one network node.

In the embodiment of the present application, the first user plane path is established through the first access network device. Therefore, the terminal receives information of at least one network node sent from the first access network device.

S1007, the terminal sends information of the second network node to the first access network device.

In case that the terminal determines the second network node, the terminal may send information of the second network node to the first access network device to indicate the second network node. After obtaining the information of the second network node, the first access network device may determine the second network node based on the information of the second network node, and establish a second user plane path between the terminal and the DN through the second network node.

In an embodiment, after receiving the information of the at least one network node, in case that the terminal does not select and determine the second network node, the terminal may not send the information of the second network node to the first access network device. The first access network device may determine the second network node from the at least one network node based on the information of the at least one network node. The information of the at least one network node may be sent from the first network node to the first access network device, or may be sent from the centralized network node to the first access network device. In an embodiment, in case that the information of the at least one network node is sent from the first network node to the first access network device, the at least one network node may be a neighboring network node of the first network node. In an embodiment, in case that the information of the at least one network node is sent from the centralized network node to the first access network device, the at least one network node may be a distributed network node managed and controlled by the centralized network node.

S1008, the first access network device establishes a second user plane path through the second network node.

The first access network device may initiate a session modification procedure for this session, and establish a user plane path in which the first access network device is connected to the DN through the second network node, that is, a second user plane path.

In conclusion, the solutions of the embodiments of the present application are based on a distributed network architecture, a first user plane path is established between the terminal and the DN through a first network node, a second user plane path is established between the terminal and the DN through a second network node, and two different user plane paths are established based on two different network nodes, realizing redundant transmission of the terminal. By establishing the redundant transmission of the terminal in a distributed network, the problem of supporting highly reliable URLLC services in a distributed network is solved.

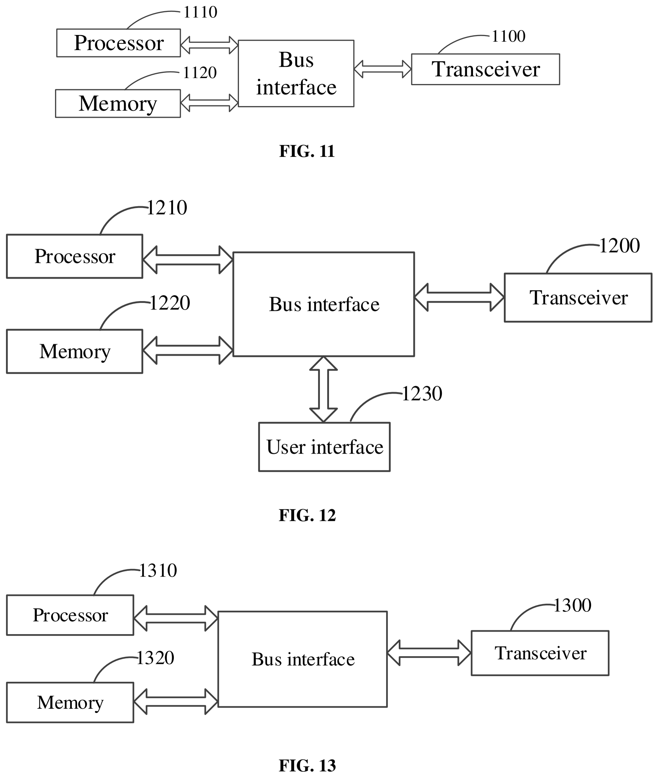

FIG. 11 is a schematic structural diagram of a first access network device according to an embodiment of the present application. As shown in FIG. 11, the first access network device includes a memory 1120, a transceiver 1100, and a processor 1110.

The memory 1120 is used for storing a computer program; the transceiver 1100 is used for receiving and sending data under control of the processor 1110; and the processor 1110 is used for reading the computer program in the memory 1120 and performing following operations:
in case that a terminal expects to establish a redundant transmission, determining a second network node, where a first user plane path is established between the terminal and a DN through a first network node; and
establishing a second user plane path between the terminal and the DN through the second network node, and the first user plane path and the second user plane path are used to establish the redundant transmission.

In an embodiment, the transceiver 1100 is used for receiving and sending data under control of the processor 1110.

In FIG. 11, a bus architecture may include any number of interconnected buses and bridges, linking together by various circuits of one or more processors represented by processor 1110 and memory represented by memory 1120. The bus architecture may also link together various other circuits such as peripheral devices, voltage regulators, and power management circuits, which are all well known in the art and, therefore, will not be described further herein. The bus interface provides the interface. The transceiver 1100 may be a plurality of components, including a transmitter and a receiver, providing a unit for communicating with various other devices over a transmission medium, such as a wireless channel, a wired channel, an optical cable, or the like. The processor 1110 is responsible for managing the bus architecture and general processing, and the memory 1120 may store data used by the processor 1110 when performing operations.

In an embodiment, the processor 1110 may be a central processing unit (CPU), an application specific integrated circuit (ASIC), a field programmable gate array (FPGA), or a complex programmable logic device (CPLD). The processor may also adopt a multi-core architecture.

The processor invokes the computer program stored in the memory to execute any of the methods provided in the embodiments of the present application according to the obtained executable instructions. The processor and memory may also be physically separated.

In an embodiment,
the first user plane path is established through the first access network device; or,
the first user plane path is established through a second access network device, and the second access network device is different from the first access network device.

In an embodiment, determining the second network node includes:
receiving information of at least one network node, and determining the second network node from the at least one network node based on the information of the at least one network node; or,
receive information of the second network node sent from the terminal, and determine the second network node based on the information of the second network node.

In an embodiment, in case that the first user plane path is established through the first access network device, receiving the information of the at least one network node includes:
receiving the information of the at least one network node sent from the first network node; or,
receiving the information of the at least one network node sent from a centralized network node.

In an embodiment, the processor is further used for reading the computer program in the memory and performing following operations:
receiving capability information sent from the terminal, where the capability information indicates establishing the redundant transmission; and
determining, based on the capability information, that the terminal expects to establish the redundant transmission.

In an embodiment, in case that the first user plane path is established through the second access network device, the processor is further used for reading the computer program in the memory and performing following operations:
receiving a resource request sent from the second access network device, where the resource request is used to request allocation of resources for a PDU session corresponding to the second user plane path or a QoS flow corresponding to the second user plane path; and
sending, based on the resources, a first RRC reconfiguration message to the second access network device, where the first RRC reconfiguration message is used to indicate the first access network device to establish a connection with the terminal.

In an embodiment, receiving the information of the at least one network node includes:
obtaining the information of the at least one network node based on the resource request sent from the second access network device; or,
receiving the information of the at least one network node sent from a centralized network node.

In an embodiment, the processor is further used for reading the computer program in the memory and performing following operations:
after establishing the connection with the terminal, determining that the terminal expects to establish the redundant transmission.

It should be noted here that the above-mentioned first access network device provided in the embodiment of the present application may implement all the method steps implemented by the method embodiment in which the execution body is the first access network device, and may achieve the same technical effect. The parts and beneficial effects of this embodiment that are the same as those of the method embodiment are not described in detail here.

FIG. 12 is a schematic structural diagram of a terminal according to an embodiment of the present application. As shown in FIG. 12, the terminal includes a memory 1220, a transceiver 1200, and a processor 1210.
the memory 1220 is used for storing a computer program; the transceiver 1200 is used for receiving and sending data under control of the processor 1210; and the processor 1210 is used for reading the computer program in the memory 1220 and performing following operations:
in case that the terminal expects to establish a redundant transmission, determining a second network node, where a first user plane path is established between the terminal and a DN through a first network node; and
sending information of the second network node to a first access network device, where the second network node is used by the first access network device to establish a second user plane path between the terminal and the DN, and the first user plane path and the second user plane path are used to establish the redundant transmission.

In FIG. 12, a bus architecture may include any number of interconnected buses and bridges, linking together by various circuits of one or more processors represented by processor 1210 and memory represented by memory 1220. The bus architecture may also link together various other circuits such as peripheral devices, voltage regulators, and power management circuits, which are all well known in the art and, therefore, will not be described further herein. The bus interface provides the interface. The transceiver 1200 may be a plurality of components, including a transmitter and a receiver, providing a unit for communicating with various other devices over a transmission medium, such as a wireless channel, a wired channel, an optical cable, or the like. For different user devices, the user interface 1230 may also be an interface capable of connecting to external or internal devices as required, and the connected devices include but are not limited to a keypad, a display, a speaker, a microphone, a joystick, and the like.

The processor 1210 is responsible for managing the bus architecture and general processing, and the memory 1220 may store data used by the processor 1210 when performing operations.

In an embodiment, the processor 1210 may be a CPU, an ASIC, an FPGA, or a CPLD, and the processor may also adopt a multi-core architecture.

The processor invokes the computer program stored in the memory to execute any of the methods provided in the embodiments of the present application according to the obtained executable instructions. The processor and memory may also be physically separated.

In an embodiment,
the first user plane path is established through the first access network device; or,
the first user plane path is established through a second access network device, and the second access network device is different from the first access network device.

In an embodiment, determining the second network node includes:
receive information of at least one network node; and
determine the second network node from the at least one network node based on the information of the at least one network node.

In an embodiment, receiving the information of the at least one network node includes:
in case that the first user plane path is established through the first access network device, receive the information of the at least one network node sent from the first access network device; or,
in case that the first user plane path is established through the second access network device, receive the information of the at least one network node sent from the second access network device.

In an embodiment, in case that the first user plane path is established through the first access network device, the processor is further used for reading the computer program in the memory and performing following operations:
send capability information to the first access network device, where the capability information is used to indicate establishing the redundant transmission.

In an embodiment, in case that the first user plane path is established through the second access network device, the processor is further used for reading the computer program in the memory and performing following operations:
send capability information to the second access network device, where the capability information is used to indicate that the terminal supports dual connectivity.

In an embodiment, the processor is further used for reading the computer program in the memory and performing following operations:
receive a second RRC reconfiguration message sent from the second access network device, where the second RRC reconfiguration message includes a first RRC reconfiguration message of the first access network device; and
establish a connection with the first access network device based on the first RRC reconfiguration message.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment are not described in detail here.

FIG. 13 is a schematic structural diagram of a second access network device according to an embodiment of the present application. As shown in FIG. 13, the second access network device includes a memory 1320, a transceiver 1300, and a processor 1310.

The memory 1320 is used for storing a computer program; the transceiver 1300 is used for receiving and sending data under control of the processor 1310; and the processor 1310 is used for reading the computer program in the memory 1320 and performing following operations:
in case that a terminal expects to establish a redundant transmission, receiving information of at least one network node, where a first user plane path is established between the terminal and a DN through a first network node; and
sending the information of the at least one network node, where the information of the at least one network node is used to determine a second network node, the second network node is used by the first access network device to establish a second user plane path between the terminal and the DN, and the first user plane path and the second user plane path are used to establish the redundant transmission.

In an embodiment, the transceiver 1300 is used for receiving and sending data under control of the processor 1310.

In FIG. 13, a bus architecture may include any number of interconnected buses and bridges, linking together by various circuits of one or more processors represented by processor 1310 and memory represented by memory 1320. The bus architecture may also link together various other circuits such as peripheral devices, voltage regulators, and power management circuits, which are all well known in the art and, therefore, will not be described further herein. The bus interface provides the interface. The transceiver 1300 may be a plurality of components, including a transmitter and a receiver, providing a unit for communicating with various other devices over a transmission medium, such as a wireless channel, a wired channel, an optical cable, or the like. The processor 1310 is responsible for managing the bus architecture and general processing, and the memory 1320 may store data used by the processor 1310 when performing operations.

In an embodiment, the processor 1310 may be a CPU, an ASIC, an FPGA, or a CPLD, and the processor may also adopt a multi-core architecture.

The processor invokes the computer program stored in the memory to execute any of the methods provided in the embodiments of the present application according to the obtained executable instructions. The processor and memory may also be physically separated.

In an embodiment,
the first user plane path is established through the first access network device; or,
the first user plane path is established through the second access network device, and the second access network device is different from the first access network device.

In an embodiment, receiving the information of the at least one network node includes:
receive the information of the at least one network node sent from the first network node;
   or,
receive the information of the at least one network node sent from a centralized network node.

In an embodiment, sending the information of the at least one network node includes:
send the information of the at least one network node to the first access network device; or,
send the information of the at least one network node to the terminal.

In an embodiment, the processor is further used for reading the computer program in the memory and performing following operations:
send a resource request to the first access network device, where the resource request is used to request allocation of resources for a PDU session corresponding to the second user plane path or a QoS flow corresponding to the second user plane path; and
send, based on the resources, a second RRC reconfiguration message to the terminal, where the second RRC reconfiguration message includes a first RRC reconfiguration message of the first access network device.

It should be noted here that the above-mentioned second access network device provided in the embodiment of the present application may implement all the method steps implemented by the method embodiment in which the execution body is the second access network device, and may achieve the same technical effect. The parts and beneficial effects of this embodiment that are the same as those of the method embodiment are not described in detail here.

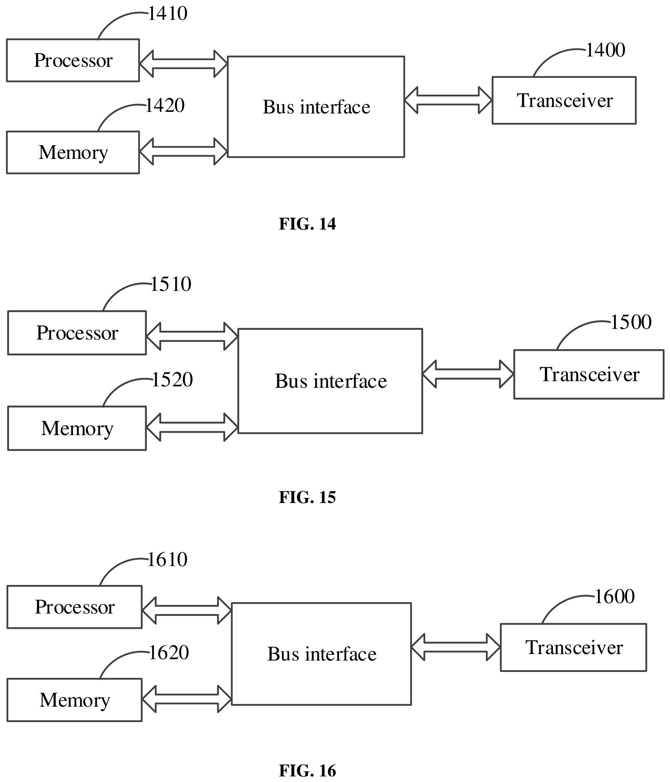

FIG. 14 is a schematic structural diagram of a first network node according to an embodiment of the present application. As shown in FIG. 14, the first network node includes a memory 1420, a transceiver 1400, and a processor 1410.

The memory 1420 is used for storing a computer program; the transceiver 1400 is used for receiving and sending data under control of the processor 1410; and the processor 1410 is used for reading the computer program in the memory 1420 and performing following operations:
establishing a first user plane path between a terminal and a DN;
in case that the terminal expects to establish a redundant transmission, obtaining information of at least one network node; and
sending the information of the at least one network node, where the at least one network node includes a second network node, the second network node is used by a first access network device to establish a second user plane path between the terminal and the DN, and the first user plane path and the second user plane path are used to establish the redundant transmission.

In an embodiment, the transceiver 1400 is used for receiving and sending data under control of the processor 1410.

In FIG. 14, a bus architecture may include any number of interconnected buses and bridges, linking together by various circuits of one or more processors represented by processor 1410 and memory represented by memory 1420. The bus architecture may also link together various other circuits such as peripheral devices, voltage regulators, and power management circuits, which are all well known in the art and, therefore, will not be described further herein. The bus interface provides the interface. The transceiver 1400 may be a plurality of components, including a transmitter and a receiver, providing a unit for communicating with various other devices over a transmission medium, such as a wireless channel, a wired channel, an optical cable, or the like. The processor 1410 is responsible for managing the bus architecture and general processing, and the memory 1420 may store data used by the processor 1410 when performing operations.

In an embodiment, the processor 1410 may be a CPU, an ASIC, an FPGA, or a CPLD, and the processor may also adopt a multi-core architecture.

The processor invokes the computer program stored in the memory to execute any of the methods provided in the embodiments of the present application according to the obtained executable instructions. The processor and memory may also be physically separated.

In an embodiment,
the first user plane path is established through the first access network device; or,
the first user plane path is established through a second access network device, and the second access network device is different from the first access network device.

In an embodiment, sending the information of the at least one network node includes:
send the information of the at least one network node to the first access network device; or,
send the information of the at least one network node to the second access network device.

It should be noted here that the above-mentioned first network node provided in the embodiment of the present application may implement all the method steps implemented by the method embodiment in which the execution body is the first network node, and may achieve the same technical effect. The parts and beneficial effects of this embodiment that are the same as those of the method embodiment are not described in detail here.

FIG. 15 is a schematic structural diagram of a centralized network node according to an embodiment of the present application. As shown in FIG. 15, the centralized network node includes a memory 1520, a transceiver 1500, and a processor 1510.

The memory 1520 is used for storing a computer program; the transceiver 1500 is used for receiving and sending data under control of the processor 1510; and the processor 1510 is used for reading the computer program in the memory 1520 and performing following operations:
in case that a terminal expects to establish a redundant transmission, obtaining information of at least one network node, where a first user plane path is established between the terminal and a DN through a first network node;
sending the information of the at least one network node, where the at least one network node includes a second network node, the second network node is used by a first access network device to establish a second user plane path between the terminal and the DN, and the first user plane path and the second user plane path are used to establish the redundant transmission.

In an embodiment, the transceiver 1500 is used for receiving and sending data under control of the processor 1510.

In FIG. 15, a bus architecture may include any number of interconnected buses and bridges, linking together by various circuits of one or more processors represented by processor 1510 and memory represented by memory 1520. The bus architecture may also link together various other circuits such as peripheral devices, voltage regulators, and power management circuits, which are all well known in the art and, therefore, will not be described further herein. The bus interface provides the interface. The transceiver 1500 may be a plurality of components, including a transmitter and a receiver, providing a unit for communicating with various other devices over a transmission medium, such as a wireless channel, a wired channel, an optical cable, or the like. The processor 1510 is responsible for managing the bus architecture and general processing, and the memory 1520 may store data used by the processor 1510 when performing operations.

In an embodiment, the processor 1510 may be a CPU, an ASIC, an FPGA, or a CPLD, and the processor may also adopt a multi-core architecture.

The processor invokes the computer program stored in the memory to execute any of the methods provided in the embodiments of the present application according to the obtained executable instructions. The processor and memory may also be physically separated.

In an embodiment,
the first user plane path is established through the first access network device; or,
the first user plane path is established through a second access network device, and the second access network device is different from the first access network device.

In an embodiment, sending the information of the at least one network node includes:
send the information of the at least one network node to the first access network device; or,
send the information of the at least one network node to the second access network device.

It should be noted here that the above-mentioned centralized network node provided in the embodiment of the present application may implement all the method steps implemented by the method embodiment in which the execution body is the centralized network node, and may achieve the same technical effect. The parts and beneficial effects of this embodiment that are the same as those of the method embodiment are not described in detail here.

FIG. 16 is a schematic structural diagram of a second network node according to an embodiment of the present application. As shown in FIG. 16, the second network node includes a memory 1620, a transceiver 1600, and a processor 1610.

The memory 1620 is used for storing a computer program; the transceiver 1600 is used for receiving and sending data under control of the processor 1610; and the processor 1610 is used for reading the computer program in the memory 1620 and performing following operations:
in case that a terminal expects to establish a redundant transmission, establishing a second user plane path between the terminal and a DN, where a first user plane path is established between the terminal and the DN through a first network node, and the first user plane path and the second user plane path are used to establish the redundant transmission.

In an embodiment, the transceiver 1600 is used for receiving and sending data under control of the processor 1610.

In FIG. 16, a bus architecture may include any number of interconnected buses and bridges, linking together by various circuits of one or more processors represented by processor 1610 and memory represented by memory 1620. The bus architecture may also link together various other circuits such as peripheral devices, voltage regulators, and power management circuits, which are all well known in the art and, therefore, will not be described further herein. The bus interface provides the interface. The transceiver 1600 may be a plurality of components, including a transmitter and a receiver, providing a unit for communicating with various other devices over a transmission medium, such as a wireless channel, a wired channel, an optical cable, or the like. The processor 1610 is responsible for managing the bus architecture and general processing, and the memory 1620 may store data used by the processor 1610 when performing operations.

In an embodiment, the processor 1610 may be a CPU, an ASIC, an FPGA, or a CPLD, and the processor may also adopt a multi-core architecture.

The processor invokes the computer program stored in the memory to execute any of the methods provided in the embodiments of the present application according to the obtained executable instructions. The processor and memory may also be physically separated.

In an embodiment,
the first user plane path is established through the first access network device; or,
the first user plane path is established through a second access network device, and the second access network device is different from the first access network device.

It should be noted here that the above-mentioned second network node provided in the embodiment of the present application may implement all the method steps implemented by the method embodiment in which the execution body is the second network node, and may achieve the same technical effect. The parts and beneficial effects of this embodiment that are the same as those of the method embodiment will not be described in detail here.

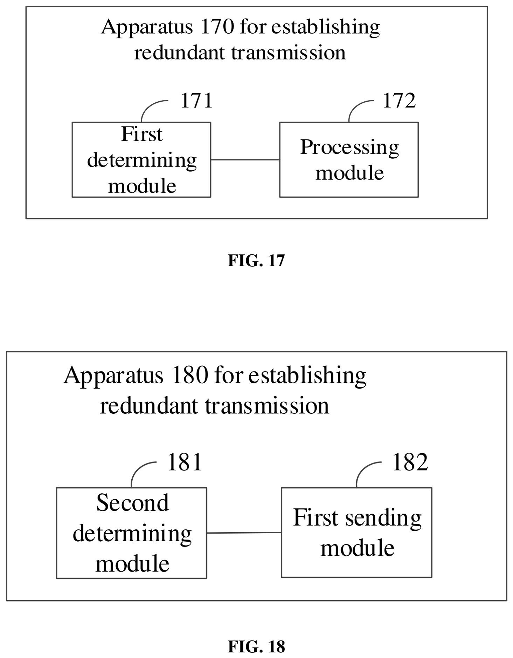

FIG. 17 is a first schematic structural diagram of an apparatus for establishing redundant transmission according to an embodiment of the present application. As shown in FIG. 17, the apparatus 170 for establishing redundant transmission includes:
a first determining module 171, configured to in case that a terminal expects to establish a redundant transmission, determine a second network node, where a first user plane path is established between the terminal and a DN through a first network node; and
a processing module 172, configured to establish a second user plane path between the terminal and the DN through the second network node, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, the first determining module 171 is configured to:
receive information of at least one network node, and determine the second network node from the at least one network node based on the information of the at least one network node; or,
receive information of the second network node sent from the terminal, and determine the second network node based on the information of the second network node.

In an embodiment, in case that the first user plane path is established through the first access network device, the first determining module 171 is configured to:
receive the information of the at least one network node sent from the first network node; or,
receive the information of the at least one network node sent from a centralized network node.

In an embodiment, the first determining module 171 is configured to:
receive capability information sent from the terminal, where the capability information indicates establishing the redundant transmission; and
determine, based on the capability information, that the terminal expects to establish the redundant transmission.

In an embodiment, in case that the first user plane path is established through the second access network device, the processing module 172 is configured to:
receive a resource request sent from the second access network device, where the resource request is used to request allocation of resources for a PDU session corresponding to the second user plane path or a QoS flow corresponding to the second user plane path; and
send, based on the resources, a first radio resource control, RRC, reconfiguration message to the second access network device, where the first RRC reconfiguration message is used to indicate the first access network device to establish a connection with the terminal.

In an embodiment, the first determining module 171 is configured to:
obtain the information of the at least one network node based on the resource request sent from the second access network device; or,
receive the information of the at least one network node sent from a centralized network node.

In an embodiment, the first determining module 171 is further configured to:
after establishing the connection with the terminal, determine that the terminal expects to establish the redundant transmission.

It should be noted here that the above-mentioned apparatus for establishing redundant transmission provided in the embodiment of the present application may implement all the method steps implemented by the method embodiment in which the execution body is the first access network device, and may achieve the same technical effect. The parts and beneficial effects of this embodiment that are the same as those of the method embodiment are not described in detail here.

FIG. 18 is a second schematic structural diagram of an apparatus for establishing redundant transmission according to an embodiment of the present application. As shown in FIG. 18, the apparatus 180 for establishing redundant transmission includes:
a second determining module 181, configured to in case that a terminal expects to establish a redundant transmission, determine a second network node, where a first user plane path is established between the terminal and a DN through a first network node; and
a first sending module 182, configured to send information of the second network node to a first access network device, where the second network node is used by the first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, the second determining module 181 is configured to:
receive information of at least one network node; and
determine the second network node from the at least one network node based on the information of the at least one network node.

In an embodiment, the second determining module 181 is configured to:
in case that the first user plane path is established through the first access network device, receive the information of the at least one network node sent from the first access network device; or,
in case that the first user plane path is established through the second access network device, receive the information of the at least one network node sent from the second access network device.

In an embodiment, in case that the first user plane path is established through the first access network device, the first sending module 182 is further configured to:
send capability information to the first access network device, where the capability information is used to indicate establishing the redundant transmission.

In an embodiment, in case that the first user plane path is established through the second access network device, the first sending module 182 is further configured to:
send capability information to the second access network device, where the capability information is used to indicate that the terminal supports dual connectivity.

In an embodiment, the apparatus further includes an establishing module, and the establishing module is configured to:
receive a second RRC reconfiguration message sent from the second access network device, where the second RRC reconfiguration message includes a first RRC reconfiguration message of the first access network device; and
establish a connection with the first access network device based on the first RRC reconfiguration message.

It should be noted here that the above-mentioned apparatus for establishing redundant transmission provided in the embodiment of the present application may implement all the method steps implemented by the method embodiment in which the execution body is the terminal, and may achieve the same technical effect. The parts and beneficial effects of this embodiment that are the same as those of the method embodiment are not described in detail here.

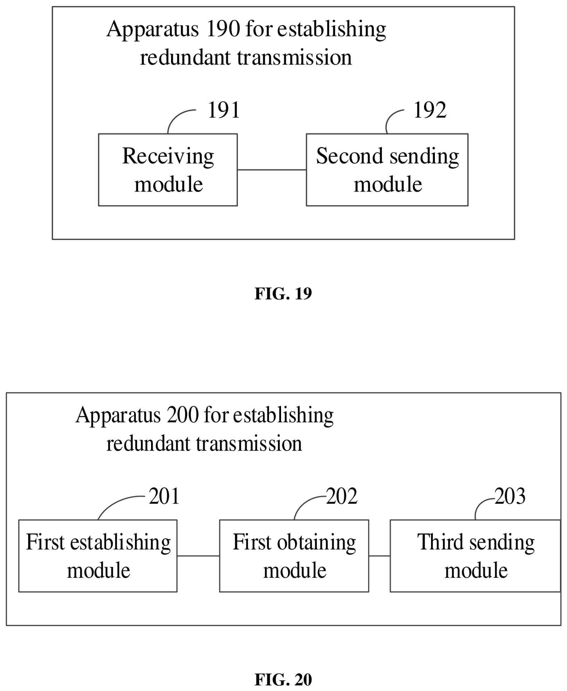

FIG. 19 is a third schematic structural diagram of an apparatus for establishing redundant transmission according to an embodiment of the present application. As shown in FIG. 19, the apparatus 190 for establishing redundant transmission includes:
a receiving module 191, configured to in case that a terminal expects to establish a redundant transmission, obtain information of at least one network node, where a first user plane path is established between the terminal and a DN through a first network node; and
a second sending module 192, configured to send the information of the at least one network node, where the information of the at least one network node is used to determine a second network node, the second network node is used by the first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, the receiving module 191 is configured to:
receive the information of the at least one network node sent from the first network node;
   or,
receive the information of the at least one network node sent from a centralized network node.

In an embodiment, the second sending module 192 is configured to:
send the information of the at least one network node to the first access network device; or,
send the information of the at least one network node to the terminal.

In an embodiment, the second sending module 192 is further configured to:
send a resource request to the first access network device, where the resource request is used to request allocation of resources for a PDU session corresponding to the second user plane path or a QoS flow corresponding to the second user plane path; and
send, based on the resources, a second RRC reconfiguration message to the terminal, where the second RRC reconfiguration message includes a first RRC reconfiguration message of the first access network device.

It should be noted here that the above-mentioned apparatus for establishing redundant transmission provided in the embodiment of the present application may implement all the method steps implemented by the method embodiment in which the execution body is the second access device, and may achieve the same technical effect. The parts and beneficial effects of this embodiment that are the same as those of the method embodiment are not described in detail here.

FIG. 20 is a fourth schematic structural diagram of an apparatus for establishing redundant transmission according to an embodiment of the present application. As shown in FIG. 20, the apparatus 200 for establishing redundant transmission includes:
a first establishing module 201, configured to establish a first user plane path between a terminal and a DN;
a first obtaining module 202, configured to in case that the terminal expects to establish a redundant transmission, obtain information of at least one network node; and
a third sending module 203, configured to send the information of the at least one network node, where the at least one network node includes a second network node, the second network node is used by a first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, the third sending module 203 is configured to:
send the information of the at least one network node to the first access network device; or,
send the information of the at least one network node to the second access network device.

It should be noted here that the above-mentioned apparatus for establishing redundant transmission provided in the embodiment of the present application may implement all the method steps implemented by the method embodiment in which the execution body is the first network node, and may achieve the same technical effect. The parts and beneficial effects of this embodiment that are the same as those of the method embodiment are not described in detail here.

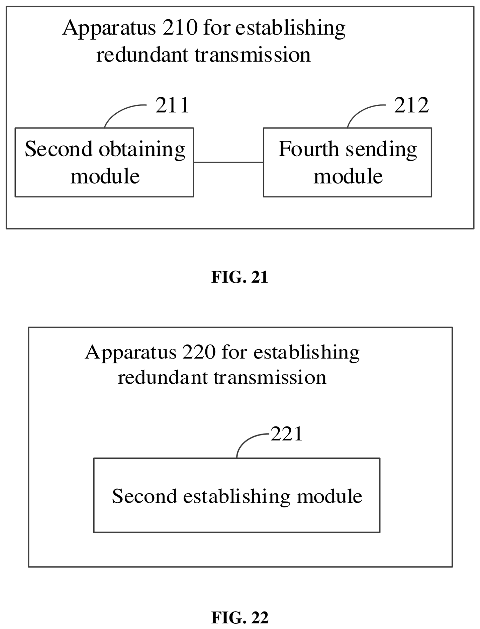

FIG. 21 is a fifth schematic structural diagram of an apparatus for establishing redundant transmission according to an embodiment of the present application. As shown in FIG. 21, the apparatus 210 for establishing redundant transmission includes:
a second obtaining module 211, configured to in case that a terminal expects to establish a redundant transmission, obtain information of at least one network node, where a first user plane path is established between the terminal and a DN through a first network node; and
a fourth sending module 212, configured to send the information of the at least one network node, where the at least one network node includes a second network node, the second network node is used by a first access network device to establish a second user plane path between the terminal and the DN, and the first user plane path and the second user plane path are used to establish the redundant transmission.

In an embodiment,
the first user plane path is established through the first access network device; or,
the first user plane path is established through a second access network device, and the second access network device is different from the first access network device.

In an embodiment, a fourth sending module 212 is further configured to:
send the information of the at least one network node to the first access network device; or,
send the information of the at least one network node to the second access network device.

It should be noted here that the above-mentioned apparatus for establishing redundant transmission provided in the embodiment of the present application may implement all the method steps implemented by the method embodiment in which the execution body is the centralized network node, and may achieve the same technical effect. The parts and beneficial effects of this embodiment that are the same as those of the method embodiment are not described in detail here.

FIG. 22 is a sixth schematic structural diagram of an apparatus for establishing redundant transmission according to an embodiment of the present application. As shown in FIG. 22, the apparatus 220 for establishing redundant transmission includes:
a second establishing module 221, configured to in case that a terminal expects to establish a redundant transmission, establish a second user plane path between the terminal and a DN, where a first user plane path is established between the terminal and the DN through a first network node, and the first user plane path and the second user plane path are used to establish the redundant transmission.

In an embodiment,
the first user plane path is established through the first access network device; or,
the first user plane path is established through a second access network device, and the second access network device is different from the first access network device.

It should be noted here that the above-mentioned apparatus for establishing redundant transmission provided in the embodiment of the present application may implement all the method steps implemented by the method embodiment in which the execution body is the second network node, and may achieve the same technical effect. The parts and beneficial effects of this embodiment that are the same as those of the method embodiment are not described in detail here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as USB flash disk, mobile hard disk, read-only memory (ROM), random access memory (RAM), magnetic disk, or optical disk.

According to an embodiment of the present application, a computer-readable storage medium is provided, where the computer-readable storage medium stores computer programs that cause a processor to perform the methods for establishing a redundant transmission provided in the above-mentioned embodiments.

It should be noted here that the above-mentioned computer-readable storage medium provided in the embodiment of the present application may implement all the method steps implemented by the method embodiment and may achieve the same technical effect. The parts and beneficial effects of this embodiment that are the same as those of the method embodiment are not described in detail here.

In an embodiment, the computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

It should also be noted that the terms "first", "second", etc. in the embodiments of the present application are used to distinguish similar objects, and are not used to describe a specific order or sequence. It should be understood that the terms used in the way are interchangeable where appropriate so that the embodiments of the present application may be implemented in an order other than that illustrated or described herein, and that the objects distinguished by "first" and "second" are generally of the same type and do not limit the number of objects; for example, the first object may be one or more.

The term "and/or" in the embodiments of the present application describes three situations of the related objects. For example, A and/or B may represent three situations: only A, A and B together, and only B. The character "/" generally represents that the two objects on two sides have a relationship of "or". The character "/" generally represents that the two objects on two sides have a relationship of "or".

The terms "multiple" and "a plurality of" in the embodiments of the present application refer to two or more, and other quantifiers are similar to them.

The solutions provided by the embodiments of the present application may be applied to a variety of systems, especially 5G systems. For example, an applicable system may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, and the like. Each of these various systems includes a terminal device and a network device. The system may also include a core network, such as an evolved packet system (EPS), a 5G system (5GS), and the like.

The terminal device according to the embodiments of the present application may be a device that provides voice and/or data connectivity to a user, a handheld device with a wireless connection function, or other processing devices connected to a wireless modem. In different systems, the name of the terminal device may also be different. For example, in the 5G system, the terminal device may be called user equipment (UE). A wireless terminal device may communicate with one or more core networks (CN) via a radio access network (RAN). The wireless terminal device may be a mobile terminal device, such as a mobile phone (or "cellular" phone) and a computer with a mobile terminal device, for example, a portable, pocket-sized, handheld, computer-built-in or vehicle-mounted mobile device, which exchanges voice and/or data with the radio access network. For example, a personal communication service (PCS) phone, a cordless phone, a session initiated protocol (SIP) phone, a wireless local loop (WLL) station, a personal digital assistant (PDA), and the like. The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present application.

The network device of the embodiments of the present application may be a base station, which may include multiple cells providing services for terminals. Depending on the specific application scenario, the base station may also be called an access point, or may be a device in an access network that communicates with wireless terminal devices through one or more sectors on the air interface, or may be called another name. The network device may be used to convert received air frames into Internet Protocol (IP) packets and vice versa, acting as a router between the wireless terminal device and the rest of the access network, where the rest of the access network may include an Internet protocol (IP) communication network. The network device may also coordinate the management of attributes of the air interface. For example, the network device in the embodiments of the present application may be a network device (base transceiver station, BTS) in the global system for mobile communications (GSM) or code division multiple access (CDMA), or a network device (NodeB) in wide-band code division multiple access (WCDMA), or an evolved network device (eNB or e-NodeB) in the long term evolution (LTE) system, or a 5G base station (gNB) in the 5G network architecture (next generation system), or a home evolved node B (HeNB), a relay node, a femto, a pico, etc., but is not limited in the embodiments of the present application. In some network structures, a network device may include a centralized unit (CU) node and a distributed unit (DU) node. The centralized unit and the distributed unit may also be geographically separated.

The network device and the terminal device each may use one or more antennas for multiple input multiple output (MIMO) transmission. MIMO transmission may be single-user MIMO (SU-MIMO) transmission or multi-user MIMO (MU-MIMO) transmission. Depending on the mode and number of antenna combinations, MIMO transmission may be a 2D-MIMO transmission, a 3D-MIMO transmission, an FD-MIMO, or a massive-MIMO, and may also be a diversity transmission, a precoding transmission, or a beamforming transmission.

As well appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory that may direct a computer or other programmable data processing device to operate in a specific manner, so that the instructions stored in the processor-readable memory produce a product including an instruction device that implements the functions specified in one or more processes in the flowchart and/or one or more blocks of the block diagram.

These processor-executable instructions may be loaded onto a computer or other programmable data processing device to cause a series of operational steps to be performed on the computer or other programmable device to produce a computer-implemented process and instructions performed on the computer or other programmable devices provide steps for performing the functions specified in one or more flows in the flowchart and/or one or more blocks of the block diagram.

It should be noted that those skilled in the art may make various modifications and variations to the present application without departing from the scope of the present application. If these modifications and variations on the present application are within the scope of the claims of the present application and their equivalent solutions, the present application is also intended to cover such modifications and variations.

## Claims

1. A method for establishing redundant transmission, performed by a first access network device, comprising:
in case that a terminal expects to establish a redundant transmission, determining a second network node, wherein a first user plane path is established between the terminal and a data network, DN, through a first network node; and
establishing a second user plane path between the terminal and the DN through the second network node, wherein the first user plane path and the second user plane path are used to establish the redundant transmission.

2. The method of claim 1,
wherein the first user plane path is established through the first access network device; or,
the first user plane path is established through a second access network device, and the second access network device is different from the first access network device.

3. The method of claim 2, wherein determining the second network node comprises:
receiving information of at least one network node, and determining the second network node from the at least one network node based on the information of the at least one network node; or,
receiving information of the second network node sent from the terminal, and determining the second network node based on the information of the second network node.

4. The method of claim 3, wherein in case that the first user plane path is established through the first access network device, receiving the information of the at least one network node comprises:
receiving the information of the at least one network node sent from the first network node; or,
receiving the information of the at least one network node sent from a centralized network node.

5. The method of claim 4, further comprising:
receiving capability information sent from the terminal, wherein the capability information indicates establishing the redundant transmission; and
determining, based on the capability information, that the terminal expects to establish the redundant transmission.

6. The method of claim 3, wherein in case that the first user plane path is established through the second access network device, the method further comprises:
receiving a resource request sent from the second access network device, wherein the resource request is used to request allocation of resources for a protocol data unit, PDU, session corresponding to the second user plane path or a quality of service, QoS, flow corresponding to the second user plane path; and
sending, based on the resources, a first radio resource control, RRC, reconfiguration message to the second access network device, wherein the first RRC reconfiguration message is used to indicate the first access network device to establish a connection with the terminal.

7. The method of claim 6, wherein receiving the information of the at least one network node comprises:
obtaining the information of the at least one network node based on the resource request sent from the second access network device; or,
receiving the information of the at least one network node sent from a centralized network node.

8. The method of claim 6, further comprising:
after establishing the connection with the terminal, determining that the terminal expects to establish the redundant transmission.

9. A method for establishing redundant transmission, performed by a terminal, wherein a first user plane path is established between the terminal and a data network, DN, through a first network node, and the method comprises:
in case that the terminal expects to establish a redundant transmission, determining a second network node; and
sending information of the second network node to a first access network device, wherein the second network node is used by the first access network device to establish a second user plane path between the terminal and the DN, and the first user plane path and the second user plane path are used to establish the redundant transmission.

10. The method of claim 9,
wherein the first user plane path is established through the first access network device; or,
the first user plane path is established through a second access network device, and the second access network device is different from the first access network device.

11. The method of claim 10, wherein determining the second network node comprises:
receiving information of at least one network node; and
determining the second network node from the at least one network node based on the information of the at least one network node.

12. The method of claim 11, wherein receiving the information of at least one network node comprises:
in case that the first user plane path is established through the first access network device, receiving the information of the at least one network node sent from the first access network device; or,
in case that the first user plane path is established through the second access network device, receiving the information of the at least one network node sent from the second access network device.

13. The method of any of claims 10 to 12, wherein in case that the first user plane path is established through the first access network device, the method further comprises:
sending capability information to the first access network device, wherein the capability information is used to indicate establishing the redundant transmission.

14. The method of any of claims 10 to 12, wherein in case that the first user plane path is established through the second access network device, the method further comprises:
sending capability information to the second access network device, wherein the capability information is used to indicate that the terminal supports dual connectivity.

15. The method of claim 14, further comprising:
receiving a second radio resource control, RRC, reconfiguration message sent from the second access network device, wherein the second RRC reconfiguration message comprises a first RRC reconfiguration message of the first access network device; and
establishing a connection with the first access network device based on the first RRC reconfiguration message.

16. A method for establishing redundant transmission, performed by a second access network device, comprising:
in case that a terminal expects to establish a redundant transmission, receiving information of at least one network node, wherein a first user plane path is established between the terminal and a data network, DN, through a first network node; and
sending the information of the at least one network node, wherein the information of the at least one network node is used to determine a second network node, the second network node is used by a first access network device to establish a second user plane path between the terminal and the DN, and the first user plane path and the second user plane path are used to establish the redundant transmission.

17. The method of claim 16,
wherein the first user plane path is established through the first access network device; or,
the first user plane path is established through the second access network device, and the second access network device is different from the first access network device.

18. The method of claim 16, wherein receiving the information of the at least one network node comprises:
receiving the information of the at least one network node sent from the first network node;
or,
receiving the information of the at least one network node sent from a centralized network node.

19. The method of any of claims 16 to 18, wherein sending the information of the at least one network node comprises:
sending the information of the at least one network node to the first access network device; or,
sending the information of the at least one network node to the terminal.

20. The method of any of claims 16 to 18, further comprising:
sending a resource request to the first access network device, wherein the resource request is used to request allocation of resources for a protocol data unit, PDU, session corresponding to the second user plane path or a quality of service, QoS, flow corresponding to the second user plane path; and
sending, based on the resources, a second radio resource control, RRC, reconfiguration message to the terminal, wherein the second RRC reconfiguration message comprises a first RRC reconfiguration message of the first access network device.

21. A method for establishing redundant transmission, performed by a first network node, comprising:
establishing a first user plane path between a terminal and a data network, DN;
in case that the terminal expects to establish a redundant transmission, obtaining information of at least one network node; and
sending the information of the at least one network node, wherein the at least one network node comprises a second network node, the second network node is used by a first access network device to establish a second user plane path between the terminal and the DN, and the first user plane path and the second user plane path are used to establish the redundant transmission.

22. The method of claim 21,
wherein the first user plane path is established through the first access network device; or,
the first user plane path is established through a second access network device, and the second access network device is different from the first access network device.

23. The method of claim 21 or 22, wherein sending the information of the at least one network node comprises:
sending the information of the at least one network node to the first access network device; or,
sending the information of the at least one network node to the second access network device.

24. A method for establishing redundant transmission, performed by a centralized network node, comprising:
in case that a terminal expects to establish a redundant transmission, obtaining information of at least one network node, wherein a first user plane path is established between the terminal and a data network, DN, through a first network node; and
sending the information of the at least one network node, wherein the at least one network node comprises a second network node, the second network node is used by a first access network device to establish a second user plane path between the terminal and the DN, and the first user plane path and the second user plane path are used to establish the redundant transmission.

25. The method of claim 24,
wherein the first user plane path is established through the first access network device; or,
the first user plane path is established through a second access network device, and the second access network device is different from the first access network device.

26. The method of claim 24 or 25, wherein sending the information of the at least one network node comprises:
sending the information of the at least one network node to the first access network device; or,
sending the information of the at least one network node to the second access network device.

27. A method for establishing redundant transmission, performed by a second network node, comprising:
in case that a terminal expects to establish a redundant transmission, establishing a second user plane path between the terminal and a data network, DN, wherein a first user plane path is established between the terminal and the DN through a first network node, and the first user plane path and the second user plane path are used to establish the redundant transmission.

28. The method of claim 27,
wherein the first user plane path is established through a first access network device; or,
the first user plane path is established through a second access network device, and the second access network device is different from the first access network device.

29. A first access network device, comprising: a memory, a transceiver and a processor;
wherein the memory is used for storing a computer program; the transceiver is used for receiving and sending data under control of the processor; and the processor is used for reading the computer program in the memory and performing following operations:
in case that a terminal expects to establish a redundant transmission, determining a second network node, wherein a first user plane path is established between the terminal and a data network, DN, through a first network node; and
establishing a second user plane path between the terminal and the DN through the second network node, wherein the first user plane path and the second user plane path are used to establish the redundant transmission.

30. The device of claim 29,
wherein the first user plane path is established through the first access network device; or,
the first user plane path is established through a second access network device, and the second access network device is different from the first access network device.

31. The device of claim 30, wherein determining the second network node comprises:
receiving information of at least one network node, and determining the second network node from the at least one network node based on the information of the at least one network node; or,
receiving information of the second network node sent from the terminal, and determine the second network node based on the information of the second network node.

32. The device of claim 31, wherein in case that the first user plane path is established through the first access network device, receiving the information of the at least one network node comprises:
receiving the information of the at least one network node sent from the first network node; or,
receiving the information of the at least one network node sent from a centralized network node.

33. The device of claim 32, wherein when the processor is further used for reading the computer program in the memory, and performing following operations:
receiving capability information sent from the terminal, wherein the capability information indicates establishing the redundant transmission; and
determining, based on the capability information, that the terminal expects to establish the redundant transmission.

34. The device of claim 31, wherein in case that the first user plane path is established through the second access network device, the processor is further used for reading the computer program in the memory and performing following operations:
receiving a resource request sent from the second access network device, wherein the resource request is used to request allocation of resources for a protocol data unit, PDU, session corresponding to the second user plane path or a quality of service, QoS, flow corresponding to the second user plane path; and
sending, based on the resources, a first radio resource control, RRC, reconfiguration message to the second access network device, wherein the first RRC reconfiguration message is used to indicate the first access network device to establish a connection with the terminal.

35. The device of claim 34, wherein receiving the information of the at least one network node comprises:
obtaining the information of the at least one network node based on the resource request sent from the second access network device; or,
receiving the information of the at least one network node sent from a centralized network node.

36. The device of claim 34, wherein the processor is further used for reading the computer program in the memory and performing following operations:
after establishing the connection with the terminal, determining that the terminal expects to establish the redundant transmission.

37. A terminal, comprising: a memory, a transceiver and a processor;
wherein the memory is used for storing a computer program; the transceiver is used for receiving and sending data under control of the processor; and the processor is used for reading the computer program in the memory and performing following operations:
in case that the terminal expects to establish a redundant transmission, determining a second network node, wherein a first user plane path is established between the terminal and a data network, DN, through a first network node; and
sending information of the second network node to a first access network device, wherein the second network node is used by the first access network device to establish a second user plane path between the terminal and the DN, and the first user plane path and the second user plane path are used to establish the redundant transmission.

38. The terminal of claim 37,
wherein the first user plane path is established through the first access network device; or,
the first user plane path is established through a second access network device, and the second access network device is different from the first access network device.

39. The terminal of claim 38, wherein determining the second network node comprises:
receiving information of at least one network node; and
determining the second network node from the at least one network node based on the information of the at least one network node.

40. The terminal of claim 39, wherein receiving the information of the at least one network node comprises:
in case that the first user plane path is established through the first access network device, receiving the information of the at least one network node sent from the first access network device; or,
in case that the first user plane path is established through the second access network device, receiving the information of the at least one network node sent from the second access network device.

41. The terminal of any of claims 38 to 40, wherein in case that the first user plane path is established through the first access network device, the processor is further used for reading the computer program in the memory and performing following operations:
sending capability information to the first access network device, wherein the capability information is used to indicate establishing the redundant transmission.

42. The terminal of any of claims 38 to 40, wherein in case that the first user plane path is established through the second access network device, the processor is further used for reading the computer program in the memory and performing following operations:
sending capability information to the second access network device, wherein the capability information is used to indicate that the terminal supports dual connectivity.

43. The terminal of any of claims 38 to 40, wherein the processor is further used for reading the computer program in the memory and performing following operations:
receiving a second radio resource control, RRC, reconfiguration message sent from the second access network device, wherein the second RRC reconfiguration message comprises a first RRC reconfiguration message of the first access network device; and
establishing a connection with the first access network device based on the first RRC reconfiguration message.

44. A second access network device, comprising: a memory, a transceiver and a processor;
wherein the memory is used for storing a computer program; the transceiver is used for receiving and sending data under control of the processor; and the processor is used for reading the computer program in the memory and performing following operations:
in case that a terminal expects to establish a redundant transmission, receiving information of at least one network node, wherein a first user plane path is established between the terminal and a data network, DN, through a first network node; and
sending the information of the at least one network node, wherein the information of the at least one network node is used to determine a second network node, the second network node is used by a first access network device to establish a second user plane path between the terminal and the DN, and the first user plane path and the second user plane path are used to establish the redundant transmission.

45. The second access network device of claim 44,
wherein the first user plane path is established through the first access network device; or,
the first user plane path is established through the second access network device, and the second access network device is different from the first access network device.

46. The second access network device of claim 44, wherein receiving the information of the at least one network node comprises:
receiving the information of the at least one network node sent from the first network node;
or,
receiving the information of the at least one network node sent from a centralized network node.

47. The second access network device of any of claims 44 to 46, wherein sending the information of the at least one network node comprises:
sending the information of the at least one network node to the first access network device; or,
sending the information of the at least one network node to the terminal.

48. The second access network device of any of claims 44 to 46, wherein the processor is further used for reading the computer program in the memory and performing following operations:
sending a resource request to the first access network device, wherein the resource request is used to request allocation of resources for a protocol data unit, PDU, session corresponding to the second user plane path or a quality of service, QoS, flow corresponding to the second user plane path; and
sending, based on the resources, a second radio resource control, RRC, reconfiguration message to the terminal, wherein the second RRC reconfiguration message comprises a first RRC reconfiguration message of the first access network device.

49. A first network node, comprising: a memory, a transceiver and a processor; wherein the memory is used for storing a computer program; the transceiver is used for receiving and sending data under control of the processor; and the processor is used for reading the computer program in the memory and performing following operations:
establishing a first user plane path between a terminal and a data network, DN;
in case that the terminal expects to establish a redundant transmission, obtaining information of at least one network node; and
sending the information of the at least one network node, wherein the at least one network node comprises a second network node, the second network node is used by a first access network device to establish a second user plane path between the terminal and the DN, and the first user plane path and the second user plane path are used to establish the redundant transmission.

50. The first network node of claim 49,
wherein the first user plane path is established through the first access network device; or,
the first user plane path is established through a second access network device, and the second access network device is different from the first access network device.

51. The first network node of claim 49 or 50, wherein sending the information of the at least one network node comprises:
sending the information of the at least one network node to the first access network device; or,
sending the information of the at least one network node to the second access network device.

52. A centralized network node, comprising: a memory, a transceiver and a processor;
wherein the memory is used for storing a computer program; the transceiver is used for receiving and sending data under control of the processor; and the processor is used for reading the computer program in the memory and performing following operations:
in case that a terminal expects to establish a redundant transmission, obtaining information of at least one network node, wherein a first user plane path is established between the terminal and a data network, DN, through a first network node;
sending the information of the at least one network node, wherein the at least one network node comprises a second network node, the second network node is used by a first access network device to establish a second user plane path between the terminal and the DN, and the first user plane path and the second user plane path are used to establish the redundant transmission.

53. The centralized network node of claim 52,
wherein the first user plane path is established through the first access network device; or,
the first user plane path is established through a second access network device, and the second access network device is different from the first access network device.

54. The centralized network node of claim 52 or 53, wherein sending the information of the at least one network node comprises:
sending the information of the at least one network node to the first access network device; or,
sending the information of the at least one network node to the second access network device.

55. A second network node, comprising: a memory, a transceiver and a processor; wherein the memory is used for storing a computer program; the transceiver is used for receiving and sending data under control of the processor; and the processor is used for reading the computer program in the memory and performing following operations:
in case that a terminal expects to establish a redundant transmission, establishing a second user plane path between the terminal and a data network, DN, wherein a first user plane path is established between the terminal and the DN through a first network node, and the first user plane path and the second user plane path are used to establish the redundant transmission.

56. The second network node of claim 55,
wherein the first user plane path is established through a first access network device; or,
the first user plane path is established through a second access network device, and the second access network device is different from the first access network device.

57. An apparatus for establishing redundant transmission, for use in a first access network device, comprising:
a first determining module, configured to in case that a terminal expects to establish a redundant transmission, determine a second network node, wherein a first user plane path is established between the terminal and a data network, DN, through a first network node; and
a processing module, configured to establish a second user plane path between the terminal and the DN through the second network node, wherein the first user plane path and the second user plane path are used to establish the redundant transmission.

58. The apparatus of claim 57,
wherein the first user plane path is established through the first access network device; or,
the first user plane path is established through a second access network device, and the second access network device is different from the first access network device.

59. The apparatus of claim 58, wherein the first determining module is configured to:
receive information of at least one network node, and determine the second network node from the at least one network node based on the information of the at least one network node; or,
receive information of the second network node sent from the terminal, and determine the second network node based on the information of the second network node.

60. The apparatus of claim 59, wherein in case that the first user plane path is established through the first access network device, the first determining module is configured to:
receive the information of the at least one network node sent from the first network node; or,
receive the information of the at least one network node sent from a centralized network node.

61. The apparatus of claim 60, wherein the first determining module is further configured to:
receive capability information sent from the terminal, wherein the capability information indicates establishing the redundant transmission; and
determine, based on the capability information, that the terminal expects to establish the redundant transmission.

62. The apparatus of claim 59, wherein in case that the first user plane path is established through the second access network device, the processing module is configured to:
receive a resource request sent from the second access network device, wherein the resource request is used to request allocation of resources for a protocol data unit, PDU, session corresponding to the second user plane path or a quality of service, QoS, flow corresponding to the second user plane path; and
send, based on the resources, a first radio resource control, RRC, reconfiguration message to the second access network device, wherein the first RRC reconfiguration message is used to indicate the first access network device to establish a connection with the terminal.

63. The apparatus of claim 62, wherein the first determining module is configured to:
obtain the information of the at least one network node based on the resource request sent from the second access network device; or,
receive the information of the at least one network node sent from a centralized network node.

64. The apparatus of claim 62, wherein the first determining module is further configured to:
after establishing the connection with the terminal, determine that the terminal expects to establish the redundant transmission.

65. An apparatus for establishing redundant transmission, for used in a terminal, wherein a first user plane path is established between the terminal and a data network, DN, through a first network node, and the apparatus comprises:
a second determining module, configured to in case that the terminal expects to establish a redundant transmission, determine a second network node; and
a first sending module, configured to send information of the second network node to a first access network device, wherein the second network node is used by the first access network device to establish a second user plane path between the terminal and the DN, and the first user plane path and the second user plane path are used to establish the redundant transmission.

66. The apparatus of claim 65,
wherein the first user plane path is established through the first access network device; or,
the first user plane path is established through a second access network device, and the second access network device is different from the first access network device.

67. The apparatus of claim 66, wherein the second determining module is configured to:
receive information of at least one network node; and
determine the second network node from the at least one network node based on the information of the at least one network node.

68. The apparatus of claim 67, wherein the second determining module is configured to:
in case that the first user plane path is established through the first access network device, receive the information of the at least one network node sent from the first access network device; or,
in case that the first user plane path is established through the second access network device, receive the information of the at least one network node sent from the second access network device.

69. The apparatus of any of claims 66 to 68, wherein in case that the first user plane path is established through the first access network device, the first sending module is further configured to:
send capability information to the first access network device, wherein the capability information is used to indicate establishing the redundant transmission.

70. The apparatus of any of claims 66 to 68, wherein in case that the first user plane path is established through the second access network device, the first sending module is further configured to:
send capability information to the second access network device, wherein the capability information is used to indicate that the terminal supports dual connectivity.

71. The apparatus of claim 70, wherein the apparatus further comprises an establishing module, and the establishing module is configured to:
receive a second radio resource control, RRC, reconfiguration message sent from the second access network device, wherein the second RRC reconfiguration message comprises a first RRC reconfiguration message of the first access network device; and
establish a connection with the first access network device based on the first RRC reconfiguration message.

72. An apparatus for establishing redundant transmission, for use in a second access network device, comprising:
a receiving module, configured to in case that a terminal expects to establish a redundant transmission, obtain information of at least one network node, wherein a first user plane path is established between the terminal and a data network, DN, through a first network node;
a second sending module, configured to send the information of the at least one network node, wherein the information of the at least one network node is used to determine a second network node, the second network node is used by the first access network device to establish a second user plane path between the terminal and the DN, and the first user plane path and the second user plane path are used to establish the redundant transmission.

73. The apparatus of claim 72,
wherein the first user plane path is established through the first access network device; or,
the first user plane path is established through the second access network device, and the second access network device is different from the first access network device.

74. The apparatus of claim 72, wherein the receiving module is configured to:
receive the information of the at least one network node sent from the first network node;
or,
receive the information of the at least one network node sent from a centralized network node.

75. The apparatus of any of claims 72 to 74, wherein the second sending module is configured to:
send the information of the at least one network node to the first access network device; or,
send the information of the at least one network node to the terminal.

76. The apparatus of any of claims 72 to 74, wherein the second sending module is further configured to:
send a resource request to the first access network device, wherein the resource request is used to request allocation of resources for a protocol data unit, PDU, session corresponding to the second user plane path or a quality of service, QoS, flow corresponding to the second user plane path; and
send, based on the resources, a second radio resource control, RRC, reconfiguration message to the terminal, wherein the second RRC reconfiguration message comprises a first RRC reconfiguration message of the first access network device.

77. An apparatus for establishing redundant transmission, for use in a first network node, comprising:
a first establishing module, configured to establish a first user plane path between a terminal and a data network, DN;
a first obtaining module, configured to in case that the terminal expects to establish a redundant transmission, obtain information of at least one network node; and
a third sending module, configured to send the information of the at least one network node, wherein the at least one network node comprises a second network node, the second network node is used by a first access network device to establish a second user plane path between the terminal and the DN, and the first user plane path and the second user plane path are used to establish the redundant transmission.

78. The apparatus of claim 77,
wherein the first user plane path is established through the first access network device; or,
the first user plane path is established through a second access network device, and the second access network device is different from the first access network device.

79. The apparatus of claim 77 or 78, wherein the third sending module is configured to:
send the information of the at least one network node to the first access network device; or,
send the information of the at least one network node to the second access network device.

80. An apparatus for establishing redundant transmission, for use in a centralized network node, comprising:
a second obtaining module, configured to in case that a terminal expects to establish a redundant transmission, obtain information of at least one network node, wherein a first user plane path is established between the terminal and a data network, DN, through a first network node; and
a fourth sending module, configured to send the information of the at least one network node, wherein the at least one network node comprises a second network node, the second network node is used by a first access network device to establish a second user plane path between the terminal and the DN, and the first user plane path and the second user plane path are used to establish the redundant transmission.

81. The apparatus of claim 80,
wherein the first user plane path is established through the first access network device; or,
the first user plane path is established through a second access network device, and the second access network device is different from the first access network device.

82. The apparatus of claim 80 or 81, wherein the fourth sending module is configured to:
send the information of the at least one network node to the first access network device; or,
send the information of the at least one network node to the second access network device.

83. An apparatus for establishing redundant transmission, for use in a second network node, comprising:
a second establishing module, configured to in case that a terminal expects to establish a redundant transmission, establish a second user plane path between the terminal and a data network, DN, wherein a first user plane path is established between the terminal and the DN through a first network node, and the first user plane path and the second user plane path are used to establish the redundant transmission.

84. The apparatus of claim 83,
wherein the first user plane path is established through the first access network device; or,
the first user plane path is established through a second access network device, and the second access network device is different from the first access network device.

85. A computer-readable storage medium, wherein the computer-readable storage medium stores a computer program that cause a computer to perform the method for establishing redundant transmission of any of claims 1 to 28.
